# EUROPÄISCHE PATENTSCHRIFT

(11) **EP 3 332 178 B1**
(45) Veröffentlichungstag und Bekanntmachung des Hinweises auf die Patenterteilung: **06.10.2021**
(21) Anmeldenummer: 16757550.5
(22) Anmeldetag: 04.08.2016
(51) Int. Cl.: F24T 10/17, E21B 36/00, E21B 17/02, F16L 59/18, F16L 47/00

(54) **VERROHRUNG FÜR EINE ERDWÄRMESONDE ZUR GEWINNUNG GEOTHERMISCHER ENERGIE, INSBESONDERE TIEFENGEOTHERMISCHER ENERGIE**
PIPEWORK SYSTEM FOR A DOWNHOLE HEAT EXCHANGER FOR OBTAINING GEOTHERMAL ENERGY, IN PARTICULAR DEEP GEOTHERMAL ENERGY
CANALISATION POUR SONDE GÉOTHERMIQUE POUR LA PRODUCTION D'ÉNERGIE GÉOTHERMIQUE, NOTAMMENT D'ÉNERGIE GÉOTHERMIQUE PROFONDE

(30) Priorität: 05.08.2015 DE 102015112892
(43) Veröffentlichungstag der Anmeldung: 13.06.2018
(73) Patentinhaber: WIPOTEC GmbH, 67657 Kaiserslautern (DE); Handke Brunnenbau GmbH, 67246 Dirmstein (DE)
(72) Erfinder: HANDKE, Heiko, 67246 Dirmstein (DE); REISIG, Otto, 93339 Riedenburg (DE); DÜPPRE, Theo, 67663 Kaiserslautern (DE); ZINKE, Bernd, 66399 Mandelbachtal (DE); SCHULZ, Stefan, 67661 Kaiserslautern-Siegelbach (DE)
(74) Vertreter: Eder Schieschke & Partner mbB
(86) Internationale Anmeldenummer: PCT/DE2016/100355
(87) Internationale Veröffentlichungsnummer: WO 2017/020893

(56) Entgegenhaltungen:
- EP-A2- 0 580 271
- AT-B- 346 791
- DE-A1-102009 028 306
- DE-A1-102010 010 850
- DE-B- 1 298 470
- US-A- 3 928 903

## Beschreibung

Die Erfindung betrifft eine Verrohrung für eine Erdwärmesonde zur Gewinnung geothermischer Energie, insbesondere tiefengeothermischer Energie, mit den Merkmalen des Oberbegriffs des Patentanspruchs 1.

Der Nutzung geothermischer Energie kommt in den letzten Jahren ein immer höherer Stellenwert zu. Während bei der Nutzung von geothermischer Energie bis in Tiefen von 400 Metern zwingend eine Wärmepumpe erforderlich ist, um die Wärmeenergie technisch sinnvoll nutzen zu können, ist die Temperatur in Tiefen größer als 400 Meter bereits so hoch, dass die Temperatur des Übertragungsmediums, meist Wasser, ausreicht, um eine direkte Nutzung ohne ein Anheben des Temperaturniveaus mittels einer Wärmepumpe zu ermöglichen.

Erdwärmesonden, die für die Tiefengeothermie, also für Tiefen größer als 400 Meter geeignet sind, werden auch als tiefe Erdwärmesonden bezeichnet und bestehen üblicherweise aus einem Außenrohr, welches zur Abstützung des Bohrlochs dient, und einem Förderrohr, welches meist im Wesentlichen koaxial im Außenrohr verläuft. Im Ringraum zwischen dem Außenumfang des Förderrohrs und der Innenwandung des Außenrohrs wird ein Wärmeträgermedium in die Tiefe gefördert (meist mittels einer Pumpe, da allein die mittels Konvektion erzeugte Flussrate zu gering wäre) oder geleitet (d.h. ohne Verwendung einer Pumpe) und nimmt in den tieferen Regionen die geothermische Energie auf. Das erhitzte Wärmeträgermedium wird über das Förderrohr, welches im Folgenden auch als Förderverrohrung bezeichnet ist, an die Erdoberfläche gefördert. Dabei kann insbesondere ein geschlossener Kreislauf für das Wärmeträgermedium verwendet werden, wobei die Trennung von einem nachgeschalteten Kreislauf durch einen Wärmetauscher erfolgt.

Ein wesentliches Problem bei der Herstellung von tiefen Erdwärmesonden besteht in der Herstellung einer Förderverrohrung, die eine ausreichende mechanische und thermische Stabilität aufweist und gleichzeitig das in ihrem Inneren an die Oberfläche zu fördernde Wärmeträgermedium gut gegenüber dem im Ringraum befindlichen, kühleren Wärmeträgermedium isoliert. Die mechanischen Beanspruchungen werden dabei insbesondere durch das Eigengewicht der Förderverrohrung und der der Gewichtskraft entgegenwirkenden Auftriebskraft erzeugt sowie durch Krümmungen des Bohrungsverlaufs und damit einhergehenden Krümmungen der Förderverrohrung. Schließlich führen auch thermisch bedingte Volumenänderungen, insbesondere Längenänderungen der Förderverrohrung zu weiteren mechanischen Belastungen.

In der Praxis hat sich herausgestellt, dass einfache Förderverrohrungen, die aus Kunststoffrohren, insbesondere Polypropylen bestehen, nicht für Sonden einsetzbar sind, die sich bis in Tiefen von 2.500 m und mehr erstrecken sollen. Dabei führt insbesondere der auf die Verrohrung wirkende Auftrieb zu Problemen, da Polypropylen wegen seiner geringen Dichte im Wärmeübertragungsmedium, insbesondere Wasser aufschwimmt. Dies führt bei großen Längen der Verrohrung zu Druckspannungen in der Rohrwandung und schließlich zum Knicken der Verrohrung.

Es war daher ein wesentliches Ziel eine Förderverrohrung für tiefe Erdwärmesonden zu schaffen, die eine ausreichende mechanische Stabilität und eine ausreichende Temperaturbeständigkeit aufweist, um bis in große Tiefen von bis zu 8.000 m und für Temperaturen bis 400°C eingesetzt werden zu können. Derart hohe Temperaturen treten jedoch nur bei extrem tiefen Bohrungen auf, wobei es durch die hohe Temperatur in diesen Tiefen zu einem Verdampfen des Wärmeträgermediums kommt.

Hierzu wurde in der DE 10 2010 010 850 A1 eine als Steigrohr bezeichnete Förderverrohrung beschrieben, welche eine spezielle Isolierung aufweist. Bei dem zu isolierenden Steigrohr handelt es sich um ein konventionell gefertigtes, tragendes Stahlsteigrohr. Die thermische Isolierung ist so ausgebildet, dass sie getrennt von dem tragenden Steigrohr gefertigt und installiert werden kann. Dies ermöglicht die Verwendung von konventionellen Standardsteigrohren aus Stahl nach den Normen der Tiefbohrtechnik, insbesondere den Standards der API (American Petrolium Institute). Die Isolierung kann bei der Montage des Steigrohrs innen oder außen am Steigrohr angebracht werden. Nach der Ausführungsform gemäß Abbildung 1 der DE 10 2010 010 850 A1 ist die spezielle Isolierung innen am Steigrohr vorgesehen, wobei die Isolierung nicht über die ganze Länge fest mit dem tragenden konventionellen Steigrohr aus Stahl verbunden ist, sondern mittels einer am Verbinder des konventionellen Steigrohrs vorgesehenen Ringscheibe. Die Ringscheibe sichert die Isolierung gegen axiales Verschieben gegenüber dem Steigrohr. Die Ringscheibe greift mit ihrem Außenumfang dabei in einen umlaufenden Falz am jeweils unteren Schuss des Steigrohrs ein und wird mittels der Stirnseite des darüber angeordneten Schusses axial am Steigrohr fixiert. Die Isolierung selbst wird dabei vorzugsweise mittels einer Dichtnaht mit dem Steigrohr verlötet, verschweißt oder verklebt.

Auf diese Weise ist die spezielle Isolierung, welche als thermische Superisolation, bestehend aus einer geschlossenen Hülle aus Metall oder Kunststoff, in die ein mineralisches Pulver oder Granulat hoher Porosität eingebracht wurde, von dem tragenden Steigrohr weitestgehend entkoppelt und nur noch an den axialen Verbindungsstellen des Steigrohrs mit diesem verbunden.

Die EP 2 639 529 B1 löst die technischen Probleme, die sich durch eine durchgängige und starre Verbindung zwischen dem eigentlichen Steigrohr und einer Isolierung im Inneren des Steigrohrs ergeben, auf ähnliche Weise. Auch hier wird eine Isolierung in Form eines inneren Kunststoffrohrs, welches innerhalb des Steigrohrs (hier als äußerer Verrohrungsbereich bezeichnet) vorgesehen ist, in vorbestimmten axialen Abständen mit dem Steigrohr verbunden. Es existiert somit ein äußeres Förderrohr, welches aus einem Metall besteht und die Rolle des Steigrohrs übernimmt, und ein inneres Förderrohr, welches aus einem wärmedämmenden Kunststoff besteht und als Isolierung dient. Als Metall wird hier insbesondere Stahl und als Kunststoff Polypropylen oder ein Polypropylen enthaltender Kunststoff vorgeschlagen.

Zur Entkopplung der mechanischen Verbindung zwischen dem inneren und äußeren Förderrohr wird in der EP 2 639 529 B1 vorgeschlagen, über die Länge der Förderverrohrung eine Mehrzahl von Lastaufnahmeeinrichtungen vorzusehen, wobei der Abstand zwischen 2 Lastaufnahmeeinrichtungen insbesondere zwischen 100 und 500 m betragen kann. Das innere Förderrohr besteht bei diesem Stand der Technik, ebenso wie das Außenrohr, aus einer Vielzahl von Schüssen. Die Schüsse sind untereinander, d.h. an den einander zugewandten Stirnseiten, nicht lösbar verbunden, insbesondere durch verschweißen. Die Schüsse der Außenrohre sind miteinander verschraubt.

Die in der EP 2 639 529 B1 offenbarten Lastaufnahmeeinrichtungen weisen eine ganze Reihe von Einzelteilen auf. Dabei muss insbesondere ein Absetzstück, welches sich im fertig montierten Zustand der Fördervorrichtung axial zwischen 2 einander zugewandten Stirnflächen des darüber und darunter angeordneten Schusses des inneren Förderrohrs befindet, mit diesen Stirnflächen des inneren Förderrohrs verschweißt werden. Das Absetzstück weist an seinem Außenumfang zwei Schultern auf, die sich im montierten Zustand an hierzu komplementären Innenschultern am Innenumfang jeweils eines von zwei Lastaufnahmesegmenten abstützen. Hierdurch erfolgt eine Übertragung von axialen Kräften, die aufwärts bzw. abwärts gerichtet sind. Zwischen den Stirnseiten der äußeren Förderrohre sind in axialer Richtung aneinander angrenzend diese beiden Lastaufnahmesegmente vorgesehen. Die Lastaufnahmesegmente werden mittels dreier Schrauben offen einerseits untereinander und andererseits jeweils mit dem darüber bzw. darunter angeordneten Schuss des äußeren Förderrohrs verbunden. Zusätzlich ist es aus Montagegründen erforderlich, zwischen der unteren Schulter des Absetzstücks und der inneren Schulter des unteren Lastaufnahmesegmentes eine Distanzhülse zu verwenden, um axial abwärts gerichtete Kräfte ohne axiales Spiel vom Absetzstück auf das untere Lastaufnahmesegment und damit vom inneren Förderrohr auf das äußere Förderrohr übertragen zu können.

Eine derartige Lastaufnahmeeinrichtung besteht somit aus insgesamt sechs Komponenten, wobei hier die Schraubmuffe, die in jedem Fall zur Verbindung zweier benachbarter Schüsse des äußeren Förderrohrs erforderlich wäre, nicht mitgezählt ist.

Nachteilig bei allen bekannten Förderverrohrungen ist somit die Notwendigkeit, möglichst dichte, insbesondere stoffschlüssige Verbindungen zwischen den Schüssen des Innenrohrs bzw. der das Innenrohr bildenden Isolierung herzustellen. Zudem erfordert das Herstellen von Lastaufnahmeeinrichtungen entweder an jeder Verbindung zwischen den Schüssen des Innenrohrs und des Außenrohrs oder zumindest am Ende jeweils einer Sektion von mehreren Schüssen des Innenrohrs bzw. Außenrohrs einen beträchtlichen Montageaufwand.

Dieses Problem tritt jedoch nicht nur bei Förderverrohrungen, insbesondere koaxialen Förderverrohrungen, auf, sondern, zumindest in ähnlicher Weise, auch bei jeder Art von Verrohrung für eine Erdwärmesonde.

Ausgehend von diesem Stand der Technik liegt der Erfindung die Aufgabe zugrunde, eine Förderverrohrung für eine Erdwärmesonde zur Gewinnung geothermischer Energie, insbesondere tiefengeothermischer Energie zu schaffen, welche einfach und kostengünstig zu montieren ist.

Die Erfindung löst diese Aufgabe mit den Merkmalen des Patentanspruchs 1.

Die Erfindung geht von der Erkenntnis aus, dass auf eine stoffschlüssige Verbindung der Innenrohrschüsse des inneren Rohrs aus einem wärmeisolierenden Kunststoff verzichtet werden kann, wenn das innere Rohr gegenüber axial aufwärts oder abwärts gerichteten Kräften sektionsweise abgestützt wird. Das Abstützen erfolgt dabei durch die Übertragung von auf das innere Rohr wirkenden Kräften auf das tragende Außenrohr aus Metall.

Es ist bei dieser Konstruktion auch nicht zwingend erforderlich, dass kein Ringspalt zwischen der Innenwandung des Außenrohrs und der Außenwandung des Innenrohrs auftritt. Vielmehr wird man in der Praxis den Außendurchmesser des Innenrohrs so wählen, dass er geringfügig kleiner ist, als der Innendurchmesser des Außenrohrs. Auf diese Weise wird vermieden, dass bei der Fertigung der Innenrohrschüsse und Außenrohrschüsse nur schwer bzw. mit größerem Aufwand einzuhaltende Toleranzen zu höheren Kosten führen. Dennoch ist gewährleistet, dass bei der Montage der Verrohrung ein Innenrohrschuss schnell und ohne großen Kraftaufwand in einen Außenrohrschuss eingebracht werden kann.

Erfindungsgemäß wird daher eine Kopplung zwischen den Innenrohrschüssen verwendet, die nur auf einer kraftschlüssigen und/oder formschlüssigen Verbindung beruht oder bei der einander zugewandte Stirnseiten von Innenrohrschüssen lediglich stumpf aneinandergepresst werden. Der Begriff "Kopplung" umfasst somit im Rahmen der vorliegenden Beschreibung jegliche Art von nicht stoffschlüssiger Verbindung oder auch nur ein stumpfes Aneinanderstoßen, wodurch eine Lastübertragung zumindest in axialer Richtung erreicht wird.

Durch den Verzicht auf eine stoffschlüssige Verbindung der Innenrohrschüsse untereinander und/oder eine stoffschlüssige Verbindung eines Innenrohrschusses mit einer unmittelbar benachbarten Lastübertragungseinrichtung wird es auch möglich, unterschiedliche Kunststoffmaterialien für die Innenrohrschüsse zu verwenden bzw. zu kombinieren. Beispielsweise kann, von der Erdoberfläche aus gesehen, im oberen Bereich der Erdwärmesonde ein Kunststoffmaterial mit hoher Isolationswirkung verwendet werden und in tieferen Regionen ein Kunststoffmaterial mit geringerer Isolationswirkung. Hierdurch kann das Material an die erforderlichen Eigenschaften hinsichtlich Temperatur, Druck und Isolationswirkung an die jeweilige Tiefenregion angepasst werden. Beispielsweise kann in oberen Bereichen Polypropylen und in tieferen Bereichen Polyäthylen (z.B. PE-HD) verwendet werden.

Das Innenrohr bzw. die Innenrohrschüsse können auch, in radialer Richtung gesehen, Schichten aus unterschiedlichen Materialien aufweisen. Diese können auch durch das Ineinanderschieben von Rohren entsprechender Durchmesser und Wandstärken hergestellt sein.

Zusätzlich oder stattdessen kann auch die Wandstärke der Innenrohrschüsse (zumindest in unmittelbar aneinander angrenzende Endbereichen) unterschiedlich gewählt werden. Auch hierdurch können die Isolationswirkung der Innenrohrschüsse und andere, insbesondere mechanische Eigenschaften verändert werden.

Weisen die einander zugewandten Endbereiche zweier über eine Lastübertragungseinrichtung gekoppelter Innenrohrschüsse unterschiedliche Wandstärken auf, so kann die Lastübertragungseinrichtung, die auch aus einem einzigen Lastübertragungselement bestehen kann, so ausgebildet sein, dass die Innenwandung im Verbindungsbereich, d.h. zwischen den Endbereichen der beiden Innenrohrschüsse und im Bereich der Lastübertragungseinrichtung bzw. dem Lastübertragungselement, möglichst strömungsgünstig geformt ist, insbesondere keine Stufen aufweist.

Die ggf. für das Aneinanderpressen von Innenrohrschüssen untereinander erforderlichen axialen Kräfte (d.h. im Fall einer Kopplung, die nur einen Formschluss in einer axialen Richtung aufweist, also nur axiale Kräfte in einer axialen Richtung aufnehmen kann) können insbesondere dadurch entstehen, dass sich die Innenrohrschüsse innerhalb einer Sektion an einer Lastübertragungseinrichtung abstützen, die am oberen oder unteren Ende der Sektion vorgesehen ist. Das Abstützen an einer am oberen Ende der Sektion vorgesehenen Lastübertragungseinrichtung tritt insbesondere in Fällen auf, in denen die Dichte des wärmeisolierenden Kunststoffmaterials des inneren Förderrohrs bzw. der Innenrohrschüsse kleiner ist als die Dichte des zu fördernden Wärmeträgermediums. In diesem Fall bewirken die Auftriebskräfte ein axiales Anpressen der Innenrohrschüsse der Sektion an die am oberen Ende der Sektion vorgesehene Lastübertragungseinrichtung und damit auch ein Anpressen der jeweils benachbarten Innenrohrschüsse untereinander. Ist die Dichte des Kunststoffmaterials größer als die Dichte des Wärmeübertragungsmediums, so führen Abtriebskräfte zu einem Anpressen der Innenrohrschüsse der Sektion an die am unteren Ende der Sektion vorgesehene Lastübertragungseinrichtung und damit auch zu einem Anpressen der jeweils benachbarten Innenrohrschüsse untereinander.

Die Kopplung zwischen den Innenrohrschüssen kann auch dadurch erzeugt werden, dass die Sektionen von Innenrohrschüssen in axialer Richtung vorgespannt werden, d.h. der betreffende Teil des inneren Förderrohrs wird zwischen zwei Lastübertragungseinrichtungen eingespannt. Dies kann bereits bei der Montage der Verrohrung erfolgen. Das Einspannen kann jedoch auch dadurch erzeugt werden, dass der thermische Längenausdehnungskoeffizient des Materials des inneren Förderrohrs größer ist als der Längenausdehnungskoeffizient des Materials des äußeren Förderrohrs, so dass sich eine Verspannung der Sektionen von Innenrohrschüssen erst dann ergibt, wenn die betreffenden Sektionen in eine Tiefe abgesenkt werden, in der die Umgebungstemperatur bzw. die Temperatur des fördernden Wärmeträgermediums eine entsprechende Längenausdehnung des inneren Förderrohrs verursacht.

Die Kopplung zwischen den Innenrohrschüssen kann im einfachsten Fall durch das stumpfe Aneinanderpressen der einander zugewandten Stirnseiten der Innenrohrschüsse erfolgen. Um ein radiales Verschieben der benachbarten Innenrohrschüsse gegeneinander zu vermeiden, können die einander zugewandten Enden der Innenrohrschüsse nach einer Ausgestaltung der Erfindung so ausgestaltet sein, dass sich in der Ebene senkrecht zur Achse der Innenrohrschüsse (d.h. in den radialen Richtungen) ein Formschluss ergibt. Hierdurch werden Stufen in der Innenwandung des inneren Förderrohrs vermieden, die zu einer Beeinträchtigung des Strömungsverhaltens des geförderten Wärmeträgermediums führen würden. Diese Wirkung tritt unabhängig davon ein, ob durch den Formschluss gleichzeitig ein Reibschluss in axialer Richtung erzeugt wird.

Alle vorstehend und auch nachstehend beschriebenen Kopplungen können selbstverständlich auch zur Kopplung des obersten Innenrohrschusses einer Sektion mit der am oberen Ende oder oberhalb der Sektion vorgesehenen Lastübertragungseinrichtung oder zur Kopplung des untersten Innenrohrschusses einer Sektion mit der am unteren Ende oder unterhalb der Sektion vorgesehenen Lastübertragungseinrichtung verwendet werden.

Nach einer vorteilhaften Ausführungsform weist wenigstens eines der beiden zu koppelnden Elemente an den einander zugewandten Bereichen einer Koppelstelle wenigstens eine in Bezug auf die Achse des Innenrohrs konische Zentrierfläche auf. Hierdurch wird die Montage des inneren Förderrohrs bzw. des gesamten Förderrohrs vereinfacht. Die Zentrierfläche bzw. die mehreren Zentrierflächen sind dabei so ausgestaltet, dass durch axiale Kräfte, die auf die zu koppelnden Elemente wirken, eine radiale Ausrichtung erfolgt.

Nach einer weiteren Ausgestaltung der Erfindung sind die jeweils zu koppelnden Elemente an den einander zugewandten Bereichen einer Koppelstelle so ausgebildet, dass zusätzlich zu dem Formschluss ein Reibschluss gegen ein Auseinanderziehen der zu koppelnden Innenrohrschüsse oder des zu koppelnden Lastübertragungselements und des benachbarten Innenrohrschusses gebildet ist, vorzugsweise durch das Zusammenwirken von wenigstens zwei in Bezug auf die Achse des Innenrohrs konischen Flächen, die nach einem Einwirken von axialen Druckkräften eine Selbsthemmung in axialer Richtung bewirken. Der Reibschluss kann durch eine entsprechende geometrische Gestaltung der daran beteiligten Flächen so ausgebildet sein, dass eine Selbsthemmung gegeben ist. Insbesondere kann der Winkel einer konischen Fläche eines der zukommenden Elemente so gewählt sein, dass sich eine Selbsthemmung ergibt. Gleiches gilt Selbstverständlich auch für die Winkel zweier zusammenwirkender konischer Flächen von zwei zu koppelnden Elementen.

Als weitere Verbindungsarten eignen sich beispielsweise eine rastende Verbindung oder eine Schraubverbindung.

Erfindungsgemäß besteht das äußere Förderrohr aus einer Mehrzahl von Außenrohrschüssen und die zwischen dem oberen und dem unteren Ende der Verrohrung vorgesehenen Lastübertragungseinrichtungen umfassen jeweils ein Lastübertragungselement, welches eine in radialer Richtung über den Innenumfang des äußeren Förderrohrs hinausragende Vorkragung aufweist, welche in einen axialen Abstandsspalt zwischen einander zugewandten Stirnseiten jeweils zweier benachbarter Außenrohrschüsse eingreift oder welche in eine oder mehrere falzartige Ausnehmungen eingreift, die an der Innenkante einer oder beider einander zugewandter Stirnseiten jeweils zweier benachbarter Außenrohrschüsse ausgebildet sind.

Hierdurch ergibt sich eine sehr einfache Montage der Verrohrung, insbesondere der Lastübertragungseinrichtungen.

Die Lastübertragungseinrichtung kann nach der vorliegenden Erfindung sehr einfach aufgebaut und montierbar sein. Erfindungsgemäß besteht die Lastübertragungseinrichtung aus lediglich einem einzigen Lastübertragungselement. Ein solches Lastübertragungselement kann entweder als separates Element vorliegen oder am oberen und/oder unteren Ende eines Innenrohrschusses mit diesem verbunden oder mit diesem integriert ausgebildet sein.

Ein separates Lastübertragungselement bietet dabei den Vorteil, dass für das Herstellen des inneren Förderrohrs identische Innenrohrschüsse verwendet werden können. Allerdings bedingt dies einen geringfügig höheren Montageaufwand, da die Lastübertragungselemente separat eingesetzt bzw. montiert werden müssen. Durch eine entsprechend einfache Ausgestaltung kann dieser zusätzliche Aufwand jedoch minimiert werden. Werden Innenrohrschüsse mit damit (werksseitig oder auf der Baustelle) verbundenen oder integrierten Lastübertragungselementen verwendet, so ergibt sich zwar ein geringerer Montageaufwand, jedoch müssen unterschiedliche Typen von Innenrohrschüssen zur Herstellung einer solchen Verrohrung hergestellt bzw. angeliefert werden.

Nach der Erfindung ist das Lastübertragungselement im Wesentlichen hohlzylindrisch ausgebildet und im axialen Verlauf des inneren Förderrohrs vorgesehen, wobei die Innenwandung des Lastübertragungselements die Innenwandung des Förderrohrs mit bildet. Hierdurch ergibt sich der Vorteil einer einfachen Montage, insbesondere einer einfachen Kopplung bzw. Verbindung der jeweils benachbarten Innenrohrschüsse mit dem Lastübertragungselement.

Dabei wird man in vorteilhafter Weise den Innendurchmesser des hohlzylindrischen Lastübertragungselements so wählen, dass dieser im Wesentlichen dem Innendurchmesser der Innenrohrschüsse entspricht. Hierdurch ergibt sich der Vorteil, dass bei einer ausreichend guten koaxialen Ausrichtung der benachbarten Innenrohrschüsse an der durch diese Komponenten gebildeten Innenwandung des inneren Förderrohrs keine oder nur unwesentliche, unerwünschte Verwirbelungen des zu fördernden Wärmeträgermediums auftreten.

Im einfachsten Fall kann das Lastübertragungselement somit scheibenartig ausgebildet sein. Diese Scheibe, deren Dicke die axiale Länge der Vorkragung definiert, kann einfach zwischen zwei benachbarte Innenrohrschüsse eingesetzt werden. Der Außendurchmesser der Scheibe ist dabei so gewählt, dass er in den axialen Spalt zwischen den betreffenden Außenrohrschüssen hineinragt (dies setzt selbstverständlich voraus, dass sich die Enden der betreffenden zu koppelnden Innenrohrschüsse und Außenrohrschüsse im Wesentlichen an derselben axialen Position befinden. Die Außenrohrschüsse können nach dem Einsetzen und ggf. Koppeln der Innenrohrschüsse in üblicher Weise verbunden, insbesondere mittels einer Muffe verschraubt werden.

Selbstverständlich kann das Lastübertragungselement auch aus einem Hohlzylinder bestehen, welcher an einem axialen Ende oder in einem axialen mittleren Bereich eine entsprechende Vorkragung aufweist. Der Hohlzylinder kann dabei einen Außendurchmesser aufweisen, der im Wesentlichen dem Innendurchmesser des benachbarten Außenrohrschusses entspricht. Hierbei kann eine Spielpassung für das einfache Einsetzen in den benachbarten Außenrohrschuss vorgesehen sein, wobei die Spielpassung bewirkt, dass das Lastübertragungselement gegenüber dem Außenrohrschuss bzw. gegenüber beiden benachbarten Außenrohrschüssen sehr gut zentriert wird. Gleichzeitig ergibt sich eine Dichtwirkung im Bereich des axialen Ringspalts zwischen dem Innen- und dem Außenrohr.

An den axialen Endbereichen (maximal im gesamten axialen Bereich zwischen der radialen Vorkragung) des so ausgebildeten Lastübertragungselements kann die Geometrie so gewählt sein, dass sich die vorstehend beschriebenen Kopplungsmöglichkeiten mit dem jeweils darüber und/oder darunter angeordneten Innenrohrschuss ergeben. Insbesondere können der obere Bereich und/oder der untere Bereich eines solchen hohlzylindrischen Lastübertragungselements sich konisch verjüngend ausgebildet sein. Der jeweils benachbarte Endbereich des betreffenden Innenrohrschusses kann einen sich konisch erweiternden Innendurchmesser aufweisen, wobei die Konuswinkel des Lastübertragungselements und des Innenrohrschusses komplementär ausgebildet sein können. Hierdurch ergibt sich zum einen eine sehr gute Zentrierung und zum anderen kann bei der Montage eine ausreichende axiale Kraft zwischen diesen Komponenten erzeugt werden, so dass sich ein axialer Reibschluss ergibt. Bei einer geeigneten Wahl des Konuswinkels bzw. der Konuswinkel kann hier auch eine Selbsthemmung erreicht werden.

Der bzw. die axialen Bereiche eines so ausgebildeten Lastübertragungselements können auch so ausgebildet sein, dass sie jeweils eine sich axial erstreckende Zylinderwandung aufweisen, die eine geringere Dicke aufweist als die Dicke der Wandung des jeweils damit zu koppelnden Innenrohrschusses. Ein entsprechender Endbereich des benachbarten Innenrohrschusses kann dann komplementär ausgebildet sein und insbesondere einen Durchmesser des Außenumfangs aufweisen, welcher gegenüber dem weiteren axialen Verlauf des Innenrohrschusses reduziert ist. Der Betrag, um den die Dicke der Wandung in diesem Bereich reduziert ist, kann so gewählt sein, dass dieser der Dicke der sich axial erstreckenden Zylinderwandung des Lastübertragungselements entspricht. Auf diese Weise können die beiden Komponenten einfach zusammengesteckt werden. Die Geometrie kann dabei selbstverständlich auch so gewählt werden, dass sich ein ausreichend starker Reibschluss in axialer Richtung ergibt.

Anstelle einer Reduzierung des Außendurchmessers des Endbereichs eines Innenrohrschusses kann selbstverständlich auch der Innendurchmesser über eine entsprechende axiale Länge vergrößert werden, so dass ein Lastübertragungselement mit einem entsprechend komplementär ausgebildeten axialen Bereich in diesen umlaufenden Ringfalz eingreifen kann.

Derartige Geometrien für die Kopplung zwischen einem Lastübertragungselement und einem benachbarten Innenrohrschuss können selbstverständlich auch - abgesehen von der radialen Vorkragung - zur Verbindung von Innenrohrschüssen untereinander verwendet werden. Selbstverständlich kann als Verbindung hier auch eine Rastverbindung oder eine Schraubverbindung vorgesehen sein.

Nach einer Ausgestaltung der Erfindung ist die radiale Vorkragung eines Lastübertragungselements umlaufend um den Umfang des Lastübertragungselements ausgebildet und weist eine solche axiale Dicke auf, dass sie von beiden einander zugewandten axialen Stirnflächen der benachbarten Außenrohrschüsse mit einer Axialkraft beaufschlagt wird, so dass eine Dichtwirkung erzeugt wird. Hierdurch kann auf zusätzliche Dichtungen bei der Montage der Außenrohrschüsse, insbesondere bei einem Verschrauben der Außenrohrschüsse, verzichtet werden.

Nach einer Ausführungsform der Erfindung kann am unteren Ende der Verrohrung ein eine untere Lastübertragungseinrichtung bildender Förderrohrfuß vorgesehen sein und/oder am oberen Ende der Verrohrung ein eine obere Lastübertragungseinrichtung bildender Förderrohrkopf. Auch die Kopplung zwischen diesen Lastübertragungseinrichtungen kann in der vorstehend beschriebenen Art und Weise erfolgen.

Der Förderrohrfuß kann dabei fest, beispielsweise durch Schraubverbindung, mit dem unteren Endbereich des untersten Außenrohrschusses verbunden sein und einen gegenüber dem Innendurchmesser des Außenrohrschusses reduzierten Innendurchmesser aufweisen, welcher insbesondere dem Innendurchmesser des inneren Förderrohrs bzw. des untersten Innenrohrschusses entsprechen kann. Auf diese Weise kann sich der unterste Innenrohrschuss gegen den Förderrohrfuß abstützen.

Es hat sich in der Praxis gezeigt, dass die Kopplungsstellen zwischen den Innenrohrschüssen nicht zwingend fluiddicht gestaltet sein müssen. Vielmehr sind kleinere Undichtigkeiten zulässig, die angesichts der Sogwirkung des im Innenvolumen des inneren Förderrohrs aufsteigenden Wärmeträgermediums nur zu einem vernachlässigbaren Nachziehen des Wärmeträgermediums aus einem gegebenenfalls bestehenden Ringspalt zwischen dem inneren und äußeren Förderrohr in das Innenvolumen des inneren Förderrohrs führen. Die Flussrate des Wärmeträgermediums vom Innenvolumen des Förderrohrs in den Ringspalt und umgekehrt muss somit kleiner sein als ein vorgegebener Grenzwert. Dieser Grenzwert sollte dabei insbesondere kleiner sein als 10%, vorzugsweise kleiner als 5% und höchst vorzugsweise kleiner als 2% der Flussrate des im Innenvolumen insgesamt geförderten Wärmeträgermediums.

Um zu vermeiden, dass das im Innenvolumen des inneren Förderrohrs transportierte Wärmeträgermedium an den Koppelstellen zwischen den Innenrohrschüssen oder zwischen den Innenrohrschüssen und den Lastübertragungseinrichtungen bzw. Lastübertragungselementen in den Ringraum zwischen dem Innen- und Außenrohr gepresst wird, können die Koppelstellen so ausgebildet sein, dass ein gegebenenfalls bestehender Spalt an den Koppelstellen axial aufwärts gerichtet verläuft, d.h. dass eine (meist umlaufende) Austrittsöffnung in der Innenwandung des inneren Förderrohrs, in Förderrichtung gesehen, nach einer (meist umlaufenden) Eintrittsöffnung am äußeren Umfang des inneren Förderrohrs vorliegt. Es wird daher allenfalls eine Sogwirkung durch das im Innenvolumen des inneren Förderrohrs transportierte Wärmeträgermedium erzeugt und das Wärmeträgermedium nicht in den Ringspalt gepresst bzw. gefördert.

Weitere Ausgestaltungen der Erfindung ergeben sich aus den Unteransprüchen.

Die Erfindung wird nachstehend anhand eines in der Zeichnung dargestellten Ausführungsbeispiels näher erläutert. In der Zeichnung zeigen:
- Fig. 1: eine schematische Darstellung einer tiefen Erdwärmesonde im axialen Schnitt mit einem in einem Bohrloch verankerten Stützrohr, in welchem eine Förderverrohrung mit aufgesetztem Kopf angeordnet ist;
- Fig. 2: eine axial abschnittsweise Darstellung der Erdwärmesonde in Fig. 1 mit dem einen Förderrohrfuß aufweisenden unteren axialen Bereich und einem Koppelbreich, in welchem zwei Schüsse des äußeren Förderrohrs gekoppelt sind, wobei in einem Fall nur der untere Innenrohrschuss des inneren Förderrohrs mit einer Lastübertragungseinrichtung gekoppelt ist (Fig. 2a) und im anderen Fall der obere und untere Innenrohrschuss mit einer Lastübertragungseinrichtung gekoppelt ist (Fig. 2b);
- Fig. 3: eine axiale Schnittdarstellung einer Stoßstelle zweier unmittelbar benachbarter Innenrohrschüsse (ohne Lastübertragungseinrichtung) einer Erdwärmesonde ähnlich Fig. 2, wobei die Innenkanten der einander zugewandten Stirnflächen der Innenrohrschüsse gefast sind;
- Fig. 4: eine axiale Schnittdarstellung einer Stoßstelle einer Erdwärmesonde ähnlich Fig. 3, an welcher eine Lastübertragungseinrichtung vorgesehen ist, welche als hohlzylindrisches Lastübertragungselement ausgebildet ist, das eine umlaufende Vorkragung aufweist, sowie Stirnflächen, die komplementär zu den geneigten Stirnflächen der Innenrohrschüsse ausgebildet sind;
- Fig. 5 - 7: eine Darstellung ähnlich Fig. 4 mit einer abgewandelten Form eines Lastübertragungselements und einer abgewandelten Form der diesem zugewandten Stirnseiten der Innenrohrschüsse;
- Fig. 8: eine axiale Schnittdarstellung einer Stoßstelle einer Erdwärmesonde ähnlich Fig. 3, an welcher eine Lastübertragungseinrichtung vorgesehen ist, welche, als einfaches hohlzylindrisches Lastübertragungselement ausgebildet ist, das an seiner Unterseite eine umlaufende Vorkragung aufweist; und
- Fig. 9: eine schematische Darstellung des wesentlichen axialen Abschnitts einer tiefen Erdwärmesonde im axialen Schnitt ähnlich Fig. 1.

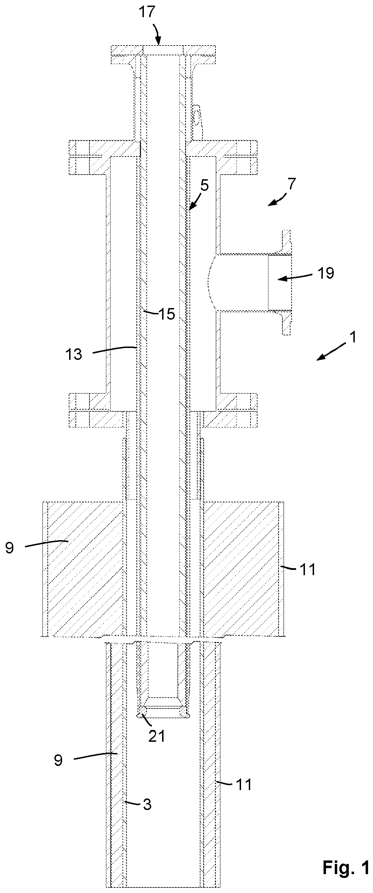

Fig. 1 zeigt in einer schematischen Darstellung eine tiefe Erdwärmesonde 1, die ein äußeres Stützrohr 3 und eine innerhalb des äußeren Stützrohrs 3 koaxial vorgesehene Förderverrohrung 5 sowie einen am oberen Ende des Stützrohrs 3 und der Förderverrohrung 5 angeordneten Förderrohrkopf 7 umfasst.

Obwohl der Kern der vorliegenden Erfindung im Folgenden zunächst in Bezug auf die koaxial im Stützrohr 3 angeordnete Förderverrohrung erläutert wird, sei bereits jetzt darauf hingewiesen, dass dieser für jede Verrohrung einer Erdwärmesonde verwendbar ist. Beispielsweise kann auch das äußere Stützrohr 3 in identischer oder sehr ähnlicher Art und Weise aufgebaut sein und aus einem Innenrohr und einem Außenrohr bestehen, wie die Förderverrohrung 5.

Das äußere Stützrohr 3 ist in ein entsprechend tiefes Bohrloch eingebracht und kann in unterschiedlichen axialen Bereichen einen unterschiedlichen Durchmesser aufweisen, wobei üblicherweise im tiefsten Bereich der Durchmesser am geringsten und im obersten Bereich am größten ist. Das äußere Stützrohr 3 dient zur Abstützung der Bohrlochwandung, so dass loses Erdreich nicht in das Bohrloch gelangen und dieses in seinem Durchmesser verengen oder gar vollkommen verschließen kann.

Der Erdbereich in der radialen Umgebung des Außenumfangs des äußeren Stützrohrs 3 kann durch ein spezielles Medium 9, beispielsweise Beton, verfestigt sein. Zusätzlich kann dieses spezielle Medium so ausgebildet sein, dass sich, abhängig von der axialen Position, ein möglichst guter Wärmeübergang bzw. eine isolierende Wirkung hinsichtlich eines Wärmetransports in radialer Richtung ergibt. Das Medium 9, beispielsweise ein spezieller Beton, kann in einem oberen, kühleren Bereich des umgebenden Erdreichs isolierend ausgebildet sein. Hierdurch wird vermieden, dass ein flüssiges Wärmeträgermedium, beispielsweise Wasser, welches in einem Ringspalt zwischen dem Außenumfang der Förderverrohrung und der Innenwandung des Stützrohrs 3 in die Tiefe geführt wird, in diesem oberen Bereich noch weiter abgekühlt wird. In einem tiefen, warmen Bereich kann das Medium 9 so ausgebildet sein, dass sich ein möglichst guter Wärmeübergang zwischen dem Erdreich und dem Stützrohr 3 bzw. dem inneren Volumen des Stützrohrs 3 ergibt. Hierzu kann ein spezielles Medium, beispielsweise ein spezieller Beton, mit einer geringen Isolationswirkung bzw. einem geringen Wärmeübergangswiderstand verwendet werden.

In Fig. 1 ist das Stützrohr 3 nochmals von einer weiteren Verrohrung, einer sogenannten Ankerverrohrung 11 umgeben. Die Ankerverrohrung 11 weist in einem axial oberen Bereich der Erdwärmesonde 1 einen größeren Innendurchmesser auf als in einem axial unteren Bereich. Selbstverständlich kann der Innendurchmesser der Ankerverrohrung 11 auch in mehreren Stufen in Richtung auf das untere Ende der Erdwärmesonde 1 abnehmen. Die Ankerverrohrung kann im einfachsten Fall einfach aus einem Stahlrohr bestehen, das ebenfalls aus einer Mehrzahl von Schüssen bestimmter Länge hergestellt sein kann. Der Ringraum zwischen der Innenwandung der Ankerverrohrung 11 und der Außenwandung des Stützrohrs 3 kann mit dem Medium 9, beispielsweise Beton verfüllt sein. Wie bereits vorstehend erläutert, kann das Medium 9 in verschiedenen axialen Bereichen auch unterschiedlich sein und insbesondere unterschiedliche Isolationseigenschaften besitzen. Die Ankerverrohrung kann ebenfalls aus einem Stahlrohr und einer am Außenumfang oder am Innenumfang vorgesehenen Isolationsschicht bestehen. Diese kann fest mit dem Stahlrohr verbunden oder als separates äußeres oder inneres Rohr ausgebildet sein.

Anstatt oder zusätzlich zu einer Isolation des Stützrohrs 3 gegenüber dem umgebenden Erdreich durch das Medium 9 kann das Stützrohr 3 auch innen- und/oder außenseitig mit einer Isolationsschicht versehen sein. Diese kann separat vom Stützrohr vorgesehen sein oder mit dem Stützrohr 3 fest verbunden sein.

Die koaxial innerhalb des äußeren Stützrohrs 3 angeordnete Förderverrohrung 5 besteht aus einem äußeren Förderrohr 13 und einem inneren Förderrohr 15. Das äußere Förderrohr 13 besteht, ebenso wie das äußere Stützrohr 3, aus einem Metall, insbesondere Stahl. Das äußere Förderrohr 13 ist so dimensioniert, dass es die gewünschte Stabilität und Belastbarkeit der Förderverrohrung 5 gewährleistet. Das innere Förderrohr 15 besteht aus einem thermisch isolierenden Material, insbesondere einem Kunststoff, wie Polypropylen. Das äußere Förderrohr kann nach API-Standard ausgeführt sein.

Am oberen Ende des äußeren Stützrohrs 3 und der Förderverrohrung 5 ist der Förderrohrkopf 7 angeordnet, welcher einen oberen Rücklaufanschluss 17 und einen seitlich angeordneten Vorlaufanschluss 19 aufweist. Der obere Bereich der Förderverrohrung 5 ist durch den Förderrohrkopf 7 bis an den Rücklaufanschluss 17 geführt und mit diesem verbunden. Hierdurch entsteht auch innerhalb des Förderrohrkopfes 7 ein Ringraum zwischen der zylindrischen Innenwandung des Förderrohrkopfes 7 und der Außenwandung der Förderverrohrung 5. Diesem Ringraum, der mit dem Vorlaufanschluss 19 verbunden ist, wird das flüssige Wärmeträgermedium, beispielsweise Wasser, zugeführt und gelangt auf diesem Weg in den Ringraum zwischen der Außenwandung der Förderverrohrung 5 und der Innenwandung des äußeren Stützrohrs 3. Hierzu ist das äußere Stützrohr 3 dicht durch eine Öffnung an der Unterseite des Förderrohrkopfes 7 geführt.

Es ist grundsätzlich auch möglich, die Förderrichtung umzukehren und das Wärmeträgermedium in der Förderverrohrung 5 nach unten zu führen und im Ringraum zwischen der Außenwandung der Förderverrohrung 5 und der Innenwandung des äußeren Stützrohrs 3 wieder nach oben.

Es ist ebenfalls möglich, ein Wärmeträgermedium zu verwenden, welches in flüssiger Phase zugeführt wird, durch die erhöhte Temperatur in den unteren Regionen verdampft und in gas- oder dampfförmiger Phase wieder an die Oberfläche transportiert wird oder aufsteigt.

Die Förderverrohrung 5 ist bis in einen unteren Endbereich des äußeren Stützrohrs 3 geführt und kann beispielsweise einige Meter über dem Boden des Bohrlochs enden.

Die koaxiale Position der Förderverrohrung 5 innerhalb des äußeren Stützrohrs 3 kann mittels nicht dargestellter Abstandshalter gewährleistet sein. Hierbei kann es sich um axial kurze Abstandshalter handeln, die an der Außenwandung des äußeren Förderrohrs 13 angeordnet sind. Insbesondere können an einer axialen Position jeweils drei, um einen Winkel von 120° versetzt angeordnete Abstandshalter vorgesehen sein. Der Abstand der axialen Positionen, an denen jeweils Abstandshalter vorzusehen sind, muss selbstverständlich in geeigneter Weise gewählt werden.

Die Förderverrohrung 5 weist an ihrem unteren Ende einen Förderrohrfuß 21 auf, welcher erforderlichenfalls zur Kopplung des inneren Förderrohrs mit dem äußeren Förderrohr dient. Dabei sei an dieser Stelle nochmals darauf hingewiesen, dass der Begriff "Kopplung" im Rahmen der vorliegenden Beschreibung jegliche Art von nicht stoffschlüssiger Verbindung oder auch nur ein stumpfes Aneinanderstoßen bezeichnet, wodurch eine Lastübertragung zumindest in axialer Richtung erreicht wird.

Der Förderrohrfuß kann somit so ausgestaltet sein, dass das untere Ende des inneren Förderrohrs 15 in jedem Fall fest mit dem unteren Ende des äußeren Förderrohrs 13 verbunden ist. Hierzu kann der Förderrohrfuß 21 als eigenständiges Teil ausgebildet sein, welches in das untere Ende des äußeren Förderrohrs 13 eingeschraubt wird. Der in das äußere Förderrohr 15 eingreifende Bereich des Förderrohrfußes 21 kann dann fest mit dem unteren Ende des inneren Förderrohrs 15 verbunden sein, beispielsweise durch Kleben oder Verschweißen. Der Förderrohrfuß 21 kann jedoch auch so ausgestaltet sein, dass auf eine feste Verbindung mit dem unteren Ende des inneren Förderrohrs 15 verzichtet wird. Stattdessen kann sich das innere Förderrohr 15 nur gegen einen hierfür ausgebildeten Bereich des Förderrohrfußes 21 abstützen. Dabei kann es sich insbesondere um den in das äußere Förderrohr 13 eingreifenden Bereich des Förderrohrfußes 21 handeln.

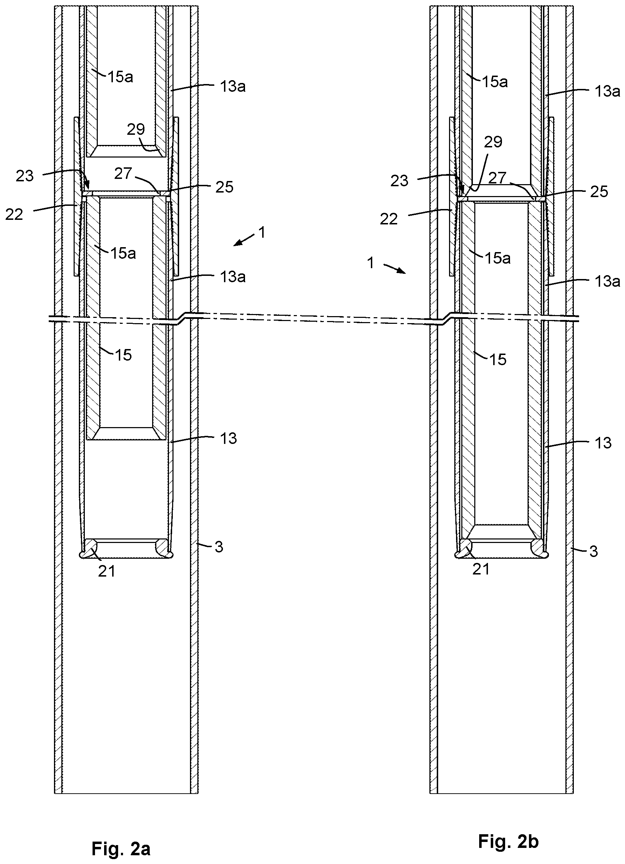

Die Darstellungen in den Fig. 2a und 2b verdeutlichen mögliche Varianten zur Gestaltung und Wirkung des Förderrohrfußes 21.

Fig. 2a zeigt eine Variante, bei welcher das innere Förderrohr 15 nicht mit dem Förderrohrfuß 21 gekoppelt ist. Dies kann beispielsweise dadurch geschehen, dass das separate innere Förderrohr 15 eine geringere Dichte aufweist als das flüssige Wärmeträgermedium und infolge des Auftriebs und eines vorhandenen axialen Spiels mit seinem unteren Ende vom Förderrohrfuß 21 wegbewegt wird.

Fig. 2b zeigt eine Variante, bei der sich das innere Förderrohr 15 mit seinem unteren Ende, welches an seinem inneren Rand eine Fase aufweist, gegen den in das äußere Förderrohr 13 eingreifenden Teil des Förderrohrfußes 21 abstützt. Die hierdurch erreichte Kopplung kann entweder dadurch entstehen, dass das innere Förderrohr eine größere Dichte aufweist als das flüssige Wärmeträgermedium und demzufolge den Förderrohrfuß 21 mit einer entsprechenden um den Auftrieb reduzierten Gewichtskraft beaufschlagt. Nach einer anderen Variante kann zusätzlich eine axiale Vorspannung dadurch erreicht werden, dass eine axiale Sektion des inneren Förderrohrs 15 mit Vorspannung zwischen dem Förderrohrfuß 21 und einer am oberen Ende der Sektion angeordneten Lastübertragungseinrichtung montiert ist (siehe unten).

Sowohl das innere als auch das äußere Förderrohr 15, 13 kann aus einzelnen Innenrohrschüssen bzw. Außenrohrschüssen zusammengesetzt sein. Die Schüsse des äußeren Förderrohrs 13 und die Schüsse des Innenrohrs 15 können dabei jeweils identisch ausgebildet sein. Hierdurch ergibt sich der Vorteil höherer Stückzahlen für identisch ausgebildete Schüsse, wodurch Herstellungskosten geringer ausfallen.

Zudem ergibt sich dadurch der Vorteil, dass die Innenrohrschüsse und die Außenrohrschüsse separat hergestellt und einfach, auch auf der Baustelle, montiert werden können. Hierzu muss lediglich jeweils ein Innenrohrschuss in einen Außenrohrschuss eingeschoben werden. Dies kann zu jeder Zeit erfolgen, entweder vor einer Verbindung eines der beiden Schüsse mit dem zuvor montierten, bereits im Bohrloch befindlichen Teil der Förderverrohrung 5 oder erst anschließend. Das Einschieben eines Innenrohrschusses in einen Außenrohrschuss kann auch in jeder beliebigen Position erfolgen, insbesondere in einer horizontalen oder vertikalen Position der Schüsse.

Der in den Fig. 2a und 2b jeweils dargestellte axial obere Bereich der betreffenden Ausführungsform einer tiefen Erdwärmesonde 1 umfasst jeweils eine Stoßstelle zwischen zwei axial benachbarten Außenrohrschüssen 13a und zwei axial benachbarten Innenrohrschüssen 15a.

Bei beiden Ausführungsformen sind die Außenrohrschüsse 13a mittels eines Verbindungselements 22, beispielsweise einer Schraubmuffe, verbunden. Die dargestellte, im Wesentlichen hohlzylindrische Schraubmuffe weist jeweils einen Innengewindebereich zur Verbindung mit dem unteren bzw. oberen Außenrohrschuss 13a auf. Die betreffenden, einander zugewandten Endbereiche der Außenrohrschüsse 13a weisen hierzu Außengewindebereiche auf, die mit den Innengewindebereichen der Schraubmuffe zusammenwirken. Das Verbindungselement 22 ist vorzugsweise so ausgebildet, dass sich eine im Wesentlichen flüssigkeitsdichte Verbindung zwischen den Außenrohrschüssen 13a ergibt. Dies ist zwar nicht zwingend erforderlich, jedoch erhöht eine flüssigkeitsdichte Verbindung den Wirkungsgrad der tiefen Erdwärmesonde, da eine Durchmischung von abwärts geführtem und aufwärts geführtem Wärmeträgermedium vermieden wird.

Zwischen zwei jeweils axial benachbarten Innenrohrschüssen muss ebenfalls nicht zwingend eine im Wesentlichen flüssigkeitsdichte Verbindung gegeben sein. Denn die Funktion des inneren Förderrohrs 15 liegt in der Schaffung einer ausreichenden Isolationswirkung zwischen dem Innenvolumen der Förderverrohrung 5 und dem diese umgebenden Ringraum. Allerdings gilt auch hier, dass der Wirkungsgrad der Wärmesonde umso höher ist, je besser das Innenvolumen der Förderverrohrung 5 gegenüber dem Ringraum isoliert ist. Man wird daher vorzugsweise anstreben, eine ausreichende isolierte Wirkung über die gesamte Länge der Förderverrohrung 5 zu gewährleisten.

Hierzu ist zumindest eine Kopplung zwischen den jeweils mittelbar oder unmittelbar benachbarten Enden bzw. einander zugewandten Stirnseiten der Innenrohrschüsse 15a erforderlich. Allerdings ist nicht zwingend eine feste Verbindung zwischen den betreffenden Enden untereinander oder zwischen jeweils einem Ende und einer Lastübertragungseinrichtung 23 erforderlich. Vielmehr genügt auch ein einfaches Aneinanderliegen der betreffenden Elemente. Dies kann sowohl unter Einwirken einer axialen Anpresskraft erfolgen als auch im Wesentlichen lastlos.

Im Fall der in den Fig. 2a und 2b dargestellten Ausführungsformen ist die Lastübertragungseinrichtung 23 durch ein einfaches, scheibenförmig ausgebildetes Lastübertragungselement 25 gebildet, welches aus einem ausreichend festen Material besteht und so dimensioniert ist, dass sich eine ausreichende Stabilität ergibt, um axial wirkende Kräfte, die von dem darunter und/oder darüber angeordneten Innenrohrschuss 15a auf das Lastübertragungselement 25 ausgeübt werden, aufnehmen und auf das äußere Förderrohr 13 übertragen zu können.

Das scheibenförmige Lastübertragungselement 25 weist einen Außendurchmesser auf, der größer ist als der Innendurchmesser der Endbereiche der einander zugewandten Außenrohrschüsse 13a und kleiner als der Innendurchmesser des Verbindungselements 22, d.h. der Schraubmuffe im Bereich der Stoßstelle der beiden Außenrohrschüsse 13a. Der Innendurchmesser des Lastübertragungselements 25 ist in jedem Fall kleiner gewählt als der Außendurchmesser der betreffenden Enden der Innenrohrschüsse 15a. Vorzugsweise kann der Innendurchmesser auch so gewählt sein, dass dieser im Wesentlichen dem Innendurchmesser der Enden der Innenrohrschüsse 15a entspricht. Hierdurch ergibt sich der Vorteil, dass im Bereich der Stoßstelle die Innenwandung der Innenrohrschüsse und die Innenwandung des scheibenförmigen Lastübertragungselements 25 fluchten und somit keine Störstellen entstehen, welche die möglichst laminare Strömung des aufsteigenden Wärmeübertragungsmediums stören.

Das Lastübertragungselement kann zwei benachbarte Innenrohrschüsse in axialer Richtung vollständig voneinander trennen. Es ist jedoch ebenfalls möglich, das Lastübertragungselement so auszubilden, dass Teile der einander zugewandten Stirnflächen der benachbarten Innenrohrschüsse noch aneinander anliegen.

Das derart ausgebildete Lastübertragungselement 25 greift somit in einen axialen Spalt zwischen den einander zugewandten Enden der Außenrohrschüsse 13a ein. Dabei können die einander zugewandten Stirnseiten der Außenrohrschüsse 13a das Lastübertragungselement 25 bzw. den zwischen sie eingreifenden Randbereich beidseitig beaufschlagen und gegebenenfalls mit einer entsprechenden axialen Kraft klemmen. Das Lastübergangselement 25 kann jedoch in dem betreffenden Randbereich auch dünner ausgebildet sein als ein axialer Spalt, der bei der Montage benachbarter Außenrohrschüsse 13a bestehen bleiben kann. Allerdings sollte der axiale Spalt die dann mögliche axiale Bewegung des Lastübertragungselements 25 auf einen zulässigen axialen Bewegungsweg begrenzen.

Bei der in Fig. 2a dargestellten Ausführungsform einer tiefen Erdwärmesonde 1 besteht das innere Förderrohr 15 aus einem solchen Material und ist so ausgebildet, dass die Auftriebskraft größer ist als die Gewichtskraft, d.h. das Innere Förderrohr 15 schwimmt in dem flüssigen Wärmeübertragungsmedium auf, welches das Volumen innerhalb des äußeren Stützrohrs 3 ausfüllt. Dies gilt selbstverständlich auch für die einzelnen Innenrohrschüsse 15a.

Wie in Fig. 2a dargestellt, steigen die Innenrohrschüsse 15a innerhalb des äußeren Förderrohrs 13 jeweils so weit auf, bis der axiale Bewegungsweg durch eine jeweils zugeordnete Lastübertragungseinrichtung 23 begrenzt wird.

Generell wird man über die gesamte axiale Länge der Förderverrohrung 5 eine geeignete Anzahl von Lastübertragungseinrichtungen 23 vorsehen, wobei die Abstände der Lastübertragungseinrichtungen 23 in geeigneter Weise gewählt wird. Die Abstände sind dabei insbesondere abhängig von einer gegebenenfalls auf die Innenrohrschüsse 15a wirkenden Auftriebskraft und der Stabilität der Innenrohrschüsse, welche von deren Geometrie und deren Material abhängt.

Jede Sektion von Innenrohrschüssen zwischen zwei benachbarten Lastübertragungseinrichtungen 23 kann eine axiale Länge von beispielsweise 100 bis 300 m aufweisen. Die Länge der einzelnen Innenrohrschüsse 15a und Außenrohrschüsse 13a kann im Bereich von 8 bis 10 m liegen. Selbstverständlich ist jedoch auch jede andere beliebige Länge für die Innenrohr- und Außenrohrschüsse möglich.

Bei der in Fig. 2a dargestellten Ausführungsform, bei welcher das innere Förderrohr 15 im Wärmeträgermedium aufschwimmt, schwimmen daher die Innenrohrschüsse 15a innerhalb des äußeren Förderrohrs 13 so weit auf, bis der oberste Innenrohrschuss einer Sektion mit seinem oberen Ende an einer darüber angeordneten Lastübertragungseinrichtung 23 anliegt bzw. in seinem Bewegungsweg begrenzt wird. Die darunter befindlichen Innenrohrschüsse werden infolge des Auftriebs mit dem jeweils darüber befindlichen Innenrohrschuss gekoppelt, d.h. liegen aneinander an, wenn die Innenrohrschüsse nicht bereits bei der Montage der Förderverrohrung 5 fest miteinander verbunden wurden. Infolge von Längentoleranzen für die Innenrohrschüsse 15a bzw. Außenrohrschüsse 13a kann daher die in Fig. 2a dargestellte Situation eintreten, in der das untere Ende des untersten Innenrohrschusses 15a einer Sektion einen axialen Abstand von der Lastübertragungseinrichtung 23 und dem oberen Ende des darunter befindlichen Innenrohrschusses 15a aufweist.

Gleiches gilt auch für die unterste Sektion, welche durch den Förderrohrfuß 21 und die im axialen Verlauf oberhalb des Förderrohrfußes 21 vorgesehene erste Lastübertragungseinrichtung 23 begrenzt ist. Der Förderrohrfuß 21 stellt somit ebenfalls eine untere Lastübertragungseinrichtung dar. Wie aus Fig. 2a ersichtlich, kann die unterste Sektion von Innenrohrschüssen 15a infolge des auf sie wirkenden Auftriebs auch soweit aufschwimmen, dass ein axialer Abstand zwischen dem unteren Ende des untersten Innenrohrschusses 15a und dem axialen Anschlag des Förderrohrfußes 21 entsteht.

Im Bereich dieses axialen Abstands ist daher die gewünschte thermische Isolation nicht gewährleistet. Dies kann in der Praxis jedoch häufig toleriert werden, so dass dieser Nachteil durch die Vorteile einer einfachen Montage und kostengünstigen Herstellung der Komponenten der Förderverrohrung 5 aufgewogen werden kann.

Bei der in Fig. 2b dargestellten Ausführungsform wird ebenfalls das scheibenförmig ausgebildete Lastübertragungselement 25 verwendet, wie dies zuvor mit Bezug auf die Ausführungsform nach Fig. 2a beschrieben wurde. Allerdings sind hier die Innenrohrschüsse so montiert, dass die Enden unmittelbar benachbarter Innenrohrschüsse aneinander anliegen (oder fest miteinander verbunden sind) und die einer Lastübertragungseinrichtung 23 (einschließlich des Förderrohrfußes 21 und des Förderrohrkopfs 7, welcher eine obere Lastübertragungseinrichtung bildet) unmittelbar benachbarten Enden ebenfalls an der betreffenden Lastübertragungseinrichtung 23 anliegen. Das Anliegen kann dabei, wie bereits vorstehend erläutert, entweder im Wesentlichen lastlos oder aber mittels einer Vorspannkraft erfolgen.

Zum Erzeugen einer Vorspannkraft muss die axiale Länge der Innenrohrschüsse 15a und der Außenrohrschüsse 13a innerhalb vorgegebener Toleranzen liegen, so dass beim Verbinden der Außenrohrschüsse 13a mittels des Verbindungselements 21 die gewünschte Vorspannkraft erzeugt wird. Auf diese Weise lassen sich axiale Spalte zwischen unmittelbar benachbarten Innenrohrschüssen 15a oder an den mittelbaren Stoßstellen, an welchen eine Lastübertragungseinrichtung 23 vorgesehen ist, vermeiden. Die Isolationswirkung ist somit gegenüber der Ausführungsform nach Fig. 2a verbessert.

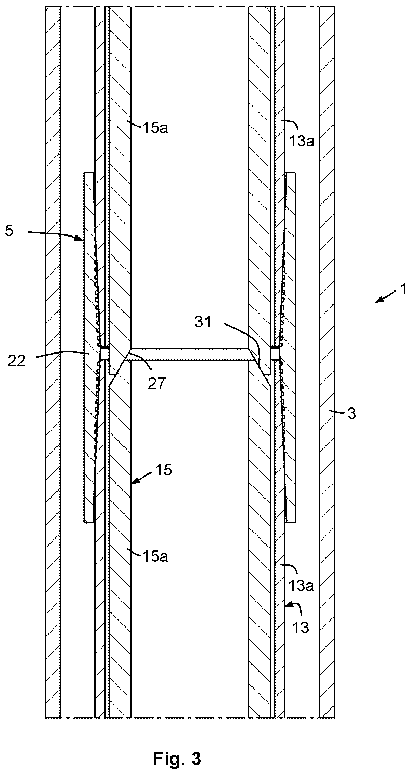

Fig. 3 zeigt eine weitere Ausführungsform einer tiefen Erdwärmesonde 1 mit einer Förderverrohrung 5, bei der das innere Förderrohr 15, ebenso wie bei der Ausführungsform nach Fig. 2, aus identischen Innenrohrschüssen 15a gebildet ist. Während die Innenrohrschüsse bei der Ausführungsform nach Fig. 2 an ihrem oberen Ende eine im Wesentlichen senkrecht zur Längsachse verlaufende Stirnfläche 27 aufweisen und nur an ihrem unteren Ende an der Innenkante der Stirnseite gefast sind (Fase 29), weisen die Innenrohrschüsse der Ausführungsform nach Fig. 3 auch an ihrem oberen Ende eine umlaufend gefaste Außenkante (Fase 31) auf. Die Winkel der gefasten Flächen jeweils einander zugewandter Enden der Außenrohrschüsse sind im Wesentlichen gleich groß. Hierdurch ergibt sich ein Formschluss bei einem Zusammenstecken der einander zugewandten Enden der Innenrohrschüsse 15a in der Ebene senkrecht zur Längsachse des inneren Förderrohrs 15.

Zusätzlich können die einander zugewandten Enden der Innenrohrschüsse 15a mit einer axialen Kraft ineinander gesteckt werden. Abhängig von der Wahl des Fasenwinkels (Winkel der gefasten Fläche 29, 31 gegenüber der Längsachse des betreffenden Innenrohrschusses 15a) kann sich dabei auch eine Selbsthemmung des Reibschlusses gegenüber einer Zugbelastung in axialer Richtung ergeben.

Eine Selbsthemmung kann jedoch selbstverständlich auch dadurch erreicht werden, dass nur eine der beiden Kanten (Innenkante oder Außenkante des betreffenden Innenrohrschusses 15a) gefast ist und der Endbereich des jeweils anderen Innenrohrschusses so ausgebildet ist, dass zumindest eine linienförmige (vorzugsweise eine umlaufende linienförmige) Berührung zwischen der gefasten Fläche und dem damit zusammenwirkenden anderen Endbereich gegeben ist. Durch das Erzeugen einer axialen Kraft erfolgt eine (gegebenenfalls infinitesimal kleine) radiale Aufbereitung des betreffenden Endbereichs eines der Innenrohrschüsse und damit das Erzeugen eines Reibschluss ist, der erst durch das Aufbringen einer ausreichend großen axialen Zugkraft wieder gelöst werden kann.

Die axialen Kräfte, die bei einem entsprechend gewählten Winkel der Fasen zu einer Selbsthemmung führen, können entweder bereits bei der Montage der Förderverrohrung, d.h. bei einem Ineinanderstecken benachbarter Innenrohrschüsse während der Montage der Förderverrohrung 5, aufgebracht werden, oder sich erst infolge axialer Kräfte ergeben, die nach dem Einbringen zumindest eines Teils der Innenrohrschüsse 15a bzw. zumindest eines Teils der gesamten Förderverrohrung in das Volumen des Stützrohrs 3 entstehen. Hierbei kann es sich um Auftriebskräfte oder um Abtriebskräfte (infolge des Eigengewichts des inneren Förderrohrs) handeln. Erfolgt die Montage der Innenrohrschüsse mittels einer Vorspannkraft, die durch die Lastübertragungseinrichtung erzeugt wird, so kann auch eine solche Vorspannkraft zu einem Reibschluss mit Selbsthemmung führen. Wird in bestimmten Betriebssituationen die Vorspannkraft aufgehoben, beispielsweise durch eine thermische Längenänderung der Innenrohrschüsse in ihrer axialen Länge, so ergibt sich dennoch ein stabiles inneres Förderrohr 15, wobei die dann entstehende axiale Zugkraft zu einer mechanischen axialen Dehnung der inneren Förderverrohrung führen kann, die der thermischen Kontraktion entgegenwirkt.

Eine Lastübertragungseinrichtung kann im Fall des inneren Förderrohrs 15 der Ausführungsform nach Fig. 3 ebenfalls als einfache Scheibe ausgebildet sein. Wird der Innendurchmesser des scheibenförmigen Lastübertragungselements so ausgebildet, dass die Innenkante im Bereich der gefasten Fläche 31 des jeweils unteren Innenrohrschusses 15a liegt, so kann auch hier bei einem geeigneten Fasenwinkel eine Selbsthemmung erreicht werden. Der jeweils obere Innenrohrschuss 15a liegt dann einfach mit seiner kleinen, senkrecht zur Längsachse verlaufenden Stirnfläche auf der ihm zugewandten Oberseite des scheibenförmigen Lastübertragungselements auf, so dass hier nur ein axialer Formschluss (gegenüber einer Abwärtsbewegung des jeweils oberen Innenrohrschusses) bewirkt wird.

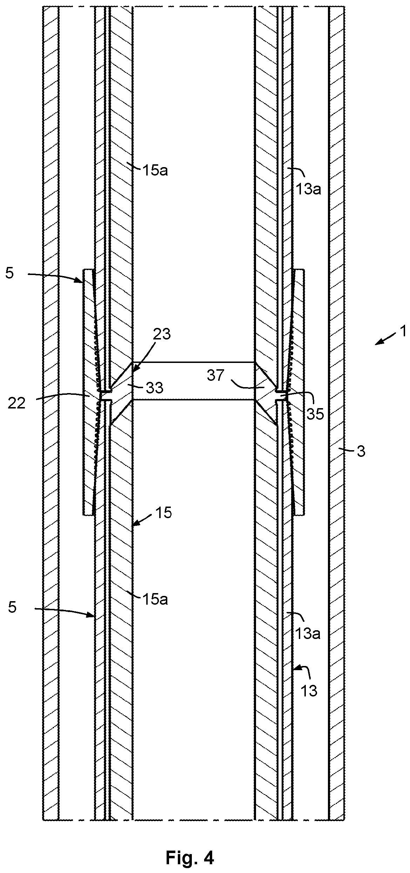

Anstelle eines scheibenförmigen Lastübertragungselements kann bei derart ausgebildeten Innenrohrschüssen 15a jedoch auch ein Lastübertragungselement 33 verwendet werden, wie es bei der Ausführungsform einer tiefen Erdwärmesonde 1 in Fig. 4 dargestellt ist. Das Lastübertragungselement 33 weist eine umlaufende Vorkragung 35 auf, die in einen axialen Spalt zwischen den einander zugewandten Stirnflächen der benachbarten Außenrohrschüsse 13a eingreift. Hierdurch erfolgt das Übertragen von insbesondere axialen Kraftkomponenten, die auf den jeweils unteren und/oder oberen Innenrohrschuss 15a in Richtung auf das Lastübertragungselement 33 wirken, auf das äußere Förderrohr 13.

An dieser Stelle sei erwähnt, dass anstatt einer umlaufenden Vorkragung jedes der hier beschriebenen Lastübertragungselemente auch zwei oder mehrere über den Umfang verteilte, stegartige Vorkragungen verwendet werden können, die in den axialen Spalt zwischen den Stirnflächen der benachbarten Außenrohrschüsse 13a eingreifen.

Nach einer anderen Ausführungsform können in der Stirnseite eines oder beider Außenrohrschüsse auch Ausnehmungen ausgebildet sein, in welche die betreffenden Vorkragungen eingreifen. Die einander zugewandten Stirnflächenbereiche der Außenrohrschüsse, in welchen keine Ausnehmungen vorgesehen sind, können dann auch auf Stoß montiert sein.

Gleiches gilt selbstverständlich für den Fall einer umlaufenden Vorkragung, die in einen bzw. zwei umlaufende Falze eingreift, die in einer bzw. beiden der einander zugewandten Stirnflächen der benachbarten Außenrohrschüsse 13a vorgesehen sind.

Das im Wesentlichen hohlzylindrisch ausgebildete Lastübertragungselement 33 nach Fig. 4 besitzt einen ringförmigen Bereich 37, dessen obere und untere Stirnseite jeweils denselben Winkel gegenüber der Längsachse der Förderverrohrung aufweisen (in diesem axialen Bereich), wie die jeweils dem Lastübertragungselement 33 zugewandte Stirnseite des betreffenden Innenrohrschusses 15a. Anstatt nur eine Fase vorzusehen, ist bei der Ausführungsform nach Fig. 4 jeweils die gesamte Stirnseite der Innenrohrschüsse entsprechend geneigt. Selbstverständlich ist jedoch auch nur eine gefasste Stirnseite möglich.

Das Lastübertragungselement 33 ermöglicht somit das Erzeugen sowohl eines Kraftschlusses in radialer Richtung als auch eines Reibschlusses in axialer Richtung mit dem jeweils darüber und darunter vorgesehenen Innenrohrschuss 15a. Zudem ist der Innendurchmesser des Lastübertragungselements 33 entsprechend dem Innendurchmesser der benachbarten Bereiche bzw. der gesamten Länge der Innenrohrschüsse 15a gewählt, so dass sich eine im Wesentlichen glatte Innenwandung im Bereich der Stoßstelle ergibt. Strömungsstörungen werden auf diese Weise vermieden.

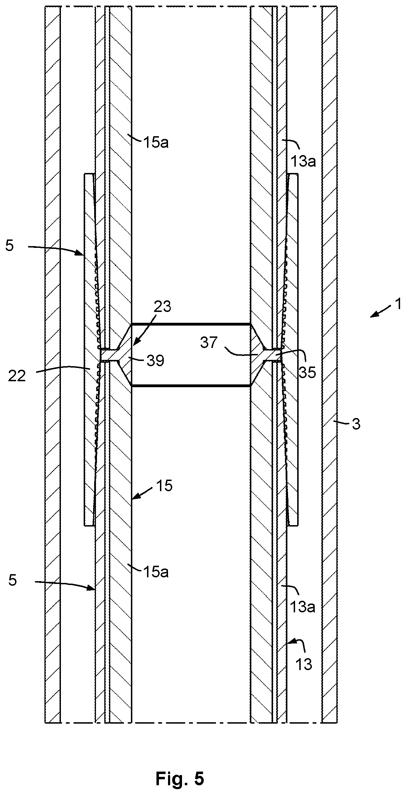

Fig. 5 zeigt eine weitere Ausführungsform einer tiefen Erdwärmesonde 1 mit einer Förderverrohrung 5, bei der die Innenrohrschüsse sowohl am oberen als auch am unteren Ende nur an der Innenkante gefast sind. Somit muss bei der Montage nicht darauf geachtet werden, mit welchem Ende der jeweils nachfolgende Innenrohrschuss mit dem vorhergehenden Innenrohrschuss verbunden werden muss.

Die unmittelbare Kopplung benachbarter Innenrohrschüsse 15a, d.h. die Kopplung ohne ein in axialer Richtung dazwischen angeordnetes Lastübertragungselement erfolgt bei dieser Ausführungsform durch ein einfaches Aneinanderliegen. Die Kopplung der Innenrohrschüsse 15a allein bewirkt somit keinerlei Reibschluss. Ein Formschluss in der Ebene senkrecht zur Längsachse der Förderverrohrung 5 kann lediglich dadurch erzeugt werden, dass der Außendurchmesser des inneren Förderrohrs bzw. der Innenrohrschüsse 15a im Wesentlichen dem Innendurchmesser des äußeren Förderrohrs bzw. der Außenrohrschüsse 13a entspricht.

Das in Fig. 5 dargestellte, im Wesentlichen hohlzylindrisch ausgebildete Lastübertragungselement 39 weist wiederum eine umlaufende Vorkragung 35 auf, die in gleicher Weise wirkt, wie zuvor in Verbindung mit der Ausführungsform nach Fig. 4 beschrieben. Die dem oberen bzw. unteren Innenrohrschuss zugewandten Stirnseiten des Lastübertragungselements 39 sind wiederum komplementär zu den betreffenden Stirnseiten der Innenrohrschüsse 15a ausgebildet. Durch die gefasten Abschnitte kann wiederum eine Selbsthemmung erreicht werden.

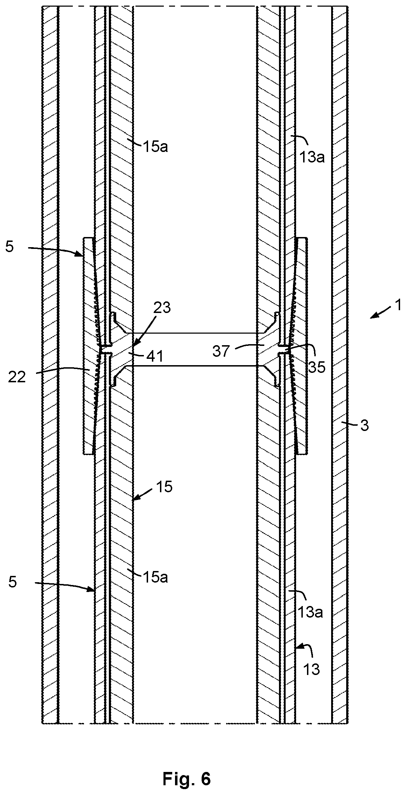

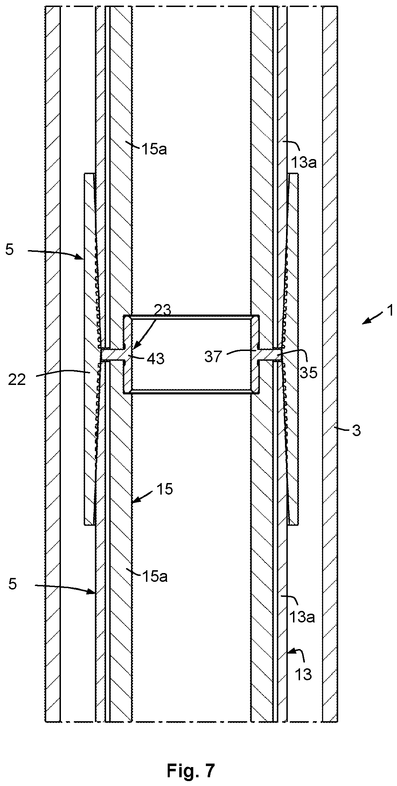

Die im Folgenden anhand der Fig. 6 und 7 beschriebenen weiteren Varianten einer Förderverrohrung 5 für eine tiefe Erdwärmesonde 1 unterscheiden sich lediglich hinsichtlich der Form der oberen bzw. unteren Stirnseite des ringförmigen Bereichs 37 des jeweils im Wesentlichen hohlzylindrischen Lastübertragungselement und hinsichtlich der jeweils komplementär ausgebildeten dem Lastübertragungselement zugewandten Stirnseiten des darüber bzw. darunter angeordneten Innenrohrschusses 15a.

Bei der Variante nach Fig. 6 weisen die dem Lastübertragungselement 41 zugewandten Stirnseiten der Innenrohrschüsse 15a jeweils gefaste Außenkanten und zudem einen kleinen, am Außenumfang vorgesehenen umlaufenden Falz auf, welcher sich an die Fase anschließt.

Das Lastübertragungselement 41 weist an seinem Außenumfang wieder eine in etwa axial mittig vorgesehene umlaufende Vorkragung auf. Ein radial äußerer Bereich umgreift jeweils den benachbarten Außenrohrschuss im Bereich des Falzes und der Fase. Ein radial innerer, im Wesentlichen senkrecht zur Längsachse verlaufender Bereich der Stirnseite liegt an einer relativ schmalen inneren Stirnfläche des betreffenden benachbarten Innenrohrschusses 15a an, welche ebenfalls senkrecht zur Längsachse verläuft.

Die in Fig. 7 dargestellte Ausführungsform einer Förderverrohrung 5 für eine tiefe Erdwärmesonde 1 umfasst ein Lastübertragungselement 43, welches ebenfalls im Wesentlichen hohlzylindrisch ausgebildet ist. Ein radial äußerer, scheibenförmig ausgebildeter Bereich ist radial so weit ausgedehnt, dass dieser auch die umlaufende Vorkragung 35 mit bildet. Ein radial innerer Bereich, welcher sich jeweils axial in beiden Richtungen erstreckt, greift in einen an der Innenkante der jeweils zugewandten Stirnseite des betreffenden Innenrohrschusses 15a vorgesehenen Falz ein.

Bei sämtlichen Ausführungsformen nach den Fig. 4 bis 7 sind die jeweils einander zugewandten Stirnseiten der Innenrohrschüsse 15a und der Lastübertragungselemente 33, 39, 41, 43 komplementär zueinander ausgebildet. In allen Fällen ergeben sich ein in radialer Richtung wirkender Formschluss und ein in axialer Wirkung wirkender Reibschluss. Dies gilt bei der Ausführungsform nach Fig. 7 zumindest dann, wenn der Außendurchmesser der sich axial nach oben und unten erstreckenden inneren Bereiche des Lastübertragungselements 43 so groß gewählt ist, dass sich eine radiale Anpresskraft an die axial verlaufende Innenwandung des Falzes in den Endbereichen der betreffenden Innenrohrschüsse 15a ergibt.

In all diesen Fällen ergibt sich zudem eine gute Dichtwirkung, so dass entweder verhindert wird, dass Wärmeträgermedium in einem Ringspalt zwischen dem inneren Förderrohr 15 und dem äußeren Förderrohr 13 gelangt (wobei in diesem Fall der Druck des Wärmeträgermediums ein radiales Anpressen des inneren Förderrohrs 15 an das äußere Förderrohr 13 bewirkt) oder dass ein Austausch zwischen dem in einem solchen Ringspalt befindlichen Wärmeträgermedium und dem im Innenvolumen der Förderverrohrung nach oben zu transportierenden Wärmeträgermedium erfolgt.

Von den dargestellten Varianten, die eine oder mehrere gegenüber der Senkrechten zur Längsachse geneigte Stirnflächen aufweisen, besitzt die in Fig. 4 dargestellte Variante den Vorteil, dass die Grenzflächen zwischen dem Lastübertragungselement 37 und den benachbarten Stirnflächen der Innenrohrschüsse 15a nach innen und aufwärts geneigt sind. Hierdurch ergibt sich zwischen einem gegebenenfalls in einem Ringraum zwischen dem inneren und äußeren Förderrohr befindlichen Wärmeträgermedium und dem im Innenvolumen der Förderverrohrung 5 aufsteigenden Wärmeträgermedium allenfalls eine Sogwirkung. Es ist jedoch keinerlei Grenzfläche bzw. ein gegebenenfalls dazwischen ausgebildeter Spalt vorhanden, der in Bezug auf das aufwärts transportierte Wärmeträgermedium nach außen und aufwärts gerichtet verläuft. Es wird somit vermieden, dass Wärmeträgermedium infolge der aufwärtsgerichteten Strömung in den Ringraum zwischen dem inneren und äußeren Förderrohr hineingedrückt wird.

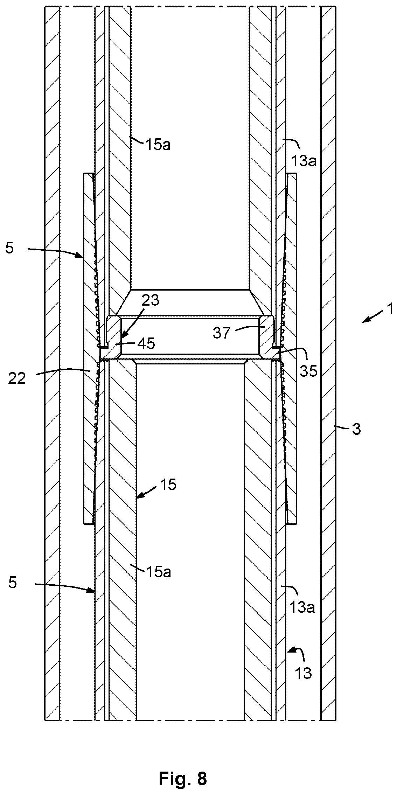

Bei der in Fig. 8 dargestellten Förderverrohrung 5 für eine Erdwärmesonde 1 wird ein Lastübertragungselement 45 verwendet, welches zwar keinen Reibschluss mit den angrenzenden Bereichen der Innenrohrschüsse 15a erzeugen kann, welches jedoch extrem einfach ausgebildet ist und dementsprechend kostengünstig hergestellt werden kann. Auch die Montage gestaltet sich äußerst einfach.

Das Lastübertragungselement 45 ist wiederum im Wesentlichen hohlzylindrisch ausgebildet und weist an seinem unteren Ende eine sich radial nach außen erstreckende Vorkragung 35 auf, welche die bereits bekannte lastübertragende Wirkung erzeugt. Der einfache hohlzylindrisch ausgebildete Bereich weist einen Außenumfang auf, der im Wesentlichen dem Innenumfang des benachbarten Innenrohrschusses 15a entspricht.

Damit kann das Lastübertragungselement 45 zur Montage einfach in das Ende eines Innenrohrschusses 15a eingesetzt werden. Die Geometrie kann auch so ausgebildet sein, dass sich hier eine Spielpassung oder Presspassung ergibt. Hierdurch ergibt sich auch eine dichtende Wirkung zwischen dem Lastübertragungselement 45 und dem betreffenden Innenrohrschuss 15a.

Abweichend von der Darstellung in Fig. 8 kann der Innendurchmesser des Lastübertragungselements 45 auch so gewählt werden, dass dieser im Wesentlichen dem Innendurchmesser der benachbarten Innenrohrschüsse 15a entspricht. Hierdurch wird der axiale Bereich verringert, in welchem eine die laminare Strömung störende Geometrie vorliegt.

Das Lastübertragungselement 45 ermöglicht daher das gewünschte Übertragen von Kräften zwischen dem inneren Förderrohr 15 und dem äußeren Förderrohr 13, wobei die Kopplung zwischen dem Lastübertragungselement und den benachbarten Innenrohrschüssen nur in einem einfachen Anliegen der einander benachbarten Flächen besteht. Auf eine feste Verbindung durch einen Formschluss und/oder Reibschluss zur Übertragung axialer Kräfte wird hier zugunsten einer einfachen Konstruktion verzichtet.

Abschließend sei darauf hingewiesen, dass sämtliche Merkmale, die in Verbindung mit nur einer der vorstehend beschriebenen Ausführungsformen näher erläutert sind, selbstverständlich, soweit technisch sinnvoll, auch mit anderen Ausführungsformen kombiniert werden können.

Auch ist es nicht zwingend erforderlich, die Koppelstelle zwischen zwei unmittelbar benachbarten Innenrohrschüssen an solchen axialen Positionen vorzusehen, an denen auch die Außenrohrschüsse gekoppelt sind. Dies ist lediglich für die Koppelstellen zwischen einer Lastübertragungseinrichtung bzw. einem Lastübertragungselement und dem darüber und/oder darunter vorgesehenen Innenrohrschuss erforderlich. Damit können die Innenrohrschüsse auch eine andere Länge aufweisen als die Außenrohrschüsse.

Schließlich ist es auch möglich, an beiden Enden eines jeden Innenrohrschusses eine Lastübertragungseinrichtung vorzusehen. Werden Lastübertragungselemente verwendet, die zwischen jeweils zwei zugewandte Enden von Außenrohrschüssen eingreifen, so ist es in diesem Fall erforderlich, dass die Außenrohrschüsse und die Innenrohrschüsse eine im wesentlichen identische Länge aufweisen.

Die Erfindung schafft durch den Verzicht auf eine stoffschlüssige Verbindung zwischen den Innenrohrschüssen eine Förderverrohrung, die äußerst kostengünstig herstellbar und einfach und schnell demontierbar ist. Die Lastübertragungseinrichtungen bewirken die gewünschte Stabilität des inneren Förderrohrs, wobei sektionsweise Kräfte, die auf den betreffenden Teil des inneren Förderrohrs wirken, auf das stabile äußere Förderrohr übertragen werden.

Obwohl die Erfindung vorstehend zunächst nur in Bezug auf die Förderverrohrung 5 der in Fig. 1 dargestellten tiefen Erdwärmesonde 1 erläutert wurde, ist diese, wie bereits eingangs bemerkt, auch auf jede andere Verrohrung anwendbar, die für eine Erdwärmesonde - unabhängig von deren Tiefe bzw. von deren axialer Länge - Verwendung finden kann. Dabei kann es sich, wie nachstehend beschrieben, um das äußere Stützrohrs 3 handeln oder auch um die Ankerverrohrung 11.

Wie bereits eingangs in Verbindung mit der tiefen Erdwärmesonde in Fig. 1 erläutert, können das äußere Stützrohrs 3 und die Ankerverrohrung 11 ebenfalls aus mehreren Schüssen bestehen und jeweils mit einer Isolation versehen sein, die jeweils am Außenumfang und/oder am Innenumfang angeordnet sein kann.

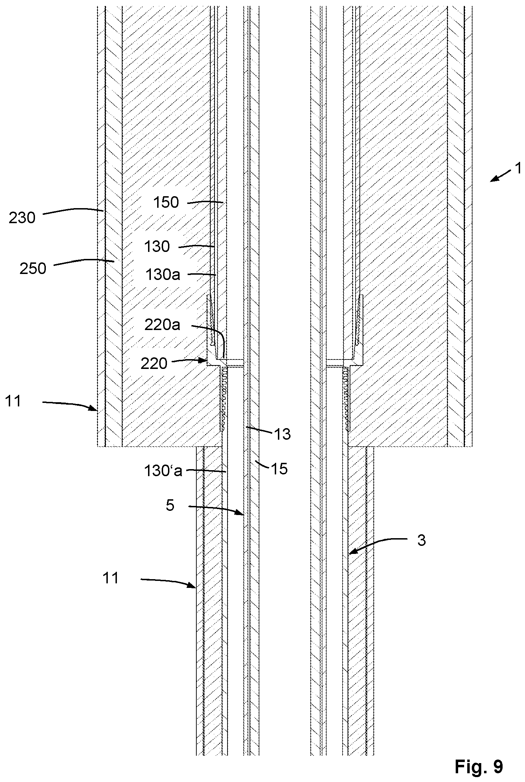

Im Folgenden wird unter Bezugnahme auf Fig. 9 dargelegt, dass auch das Stützrohr 3 bzw. die Stützverrohrung 3 und/oder die Ankerverrohrung 11 konstruktiv ebenso ausgebildet sein kann, wie die Förderverrohrung 5.

Jede dieser Verrohrungen 3, 5, 11 kann aus einem äußeren Rohr 130, 230 aus Stahl oder einem anderen tragfähigen Metall und einem inneren Rohr 150, 250 aus einem wärmeisolierenden Kunststoff bestehen. Für die konstruktive Ausführung jeder der Kombinationen aus einem äußeren Rohr 130 und einem inneren Rohr 150 bzw. einem äußeren Rohr 230 und einem inneren Rohr 150 sei auf die vorstehenden Erläuterungen in Bezug auf das äußere Rohr 13 und das innere Rohr 15 verwiesen. Insbesondere kann jedes der Rohre 130, 150 bzw. 230, 250 aus einer Mehrzahl von Schüssen bestehen. Ebenso können Sektionen von Schüssen ausgebildet sein, an deren axial oberen und/oder unteren Enden jeweils eine geeignete Lastübertragungseinrichtung vorgesehen sein kann. Hinsichtlich möglicher Ausbildungen von Lastübertragungseinrichtungen kann ebenfalls auf die vorstehenden Ausführungen in Bezug auf die Förderverrohrung 15 verwiesen werden.

Zusätzlich zu den in Fig. 9 nicht dargestellten möglichen Ausführungsformen von möglichen Verbindungen zwischen den Innenrohrschüssen der inneren Rohre 150, 250 und den Außenrohrschüssen der äußeren Rohre 130, 230 sowie von möglichen Verbindungen der Innenrohrschüsse mit den unmittelbar benachbarten Lastübertragungseinrichtungen bzw. Lastübertragungselementen, welche den zuvor in Verbindung mit der Förderverrohrung 5 beschriebenen Varianten entsprechen, ist in Fig. 9 eine weitere Alternative beschrieben, die insbesondere in Verbindung mit der Stützverrohrung bzw. dem Stützrohr 3 von Bedeutung ist, jedoch grundsätzlich auch bei allen anderen Verrohrungen eingesetzt werden kann.

Wie aus Fig. 9 ersichtlich, wird der Innendurchmesser des äußeren Rohrs 130 an einer Verbindungsstelle zwischen zwei Außenrohrschüssen 130a sprunghaft verringert. Auch hierbei können wieder Standardrohrschüsse aus Metall (insbesondere API Standardrohrschüsse), beispielsweise Stahl, verwendet werden. Solche Außenrohrschüsse 130a, 130'a können, wie in Fig. 9 dargestellt, mittels eines speziellen Verbindungselements 220, beispielsweise einer speziellen Schraubmuffe, verbunden werden, welche zwei axiale Endbereiche mit unterschiedlichem Innendurchmesser aufweisen kann, in denen die zur Verbindung erforderlichen Innengewinde vorgesehen sind. Diese Innengewinde wirken mit entsprechenden Außengewinde an den Endbereichen der einander zugewandten Außenrohrschüsse 130a und 130'a zusammen. Selbstverständlich sind jedoch auch andere lösbare oder nicht lösbare Verbindungsvarianten zur Verbindung der Außenrohrschüsse 130a, 130'a möglich.

An der Stoßstelle der axialen Endbereiche des speziellen Verbindungselements 220 ist am Innenumfang eine Schulter 220a vorgesehen. Diese dient für die darüber befindlichen Innenrohrschüsse der betreffenden Sektion als untere Lastübertragungseinrichtung. Hier ist die Lastübertragungseinrichtung also in das spezielle Verbindungselement 220 integriert.

Die Reduktion des Innendurchmesser vom größeren Innendurchmesser des Außenrohrschusses 130a auf den geringeren Innendurchmesser des darunter befindlichen Innenrohrschusses 130'a ist in Bezug auf die Wandstärke des Innenrohrs 150 so gewählt, dass der Innendurchmesser des Innenrohrs 150 dem Innendurchmesser des Außenrohrschusses 130'a entspricht. Auf diese Weise ergibt sich keine Störung hinsichtlich der Strömung des Wärmeträgermediums im Ringraum zwischen der Stützverrohrung 3 und der Förderverrohrung 5. Das spezielle Verbindungselement 220 bildet die unterste Lastübertragungseinrichtung für das Innenrohr 150 mit.

Eine derartige Verbindung von Außenrohrschüssen unterschiedlichen Durchmessers ist selbstverständlich auch für die Ankerverrohrung 11 möglich. Da im Ringraum zwischen der Außenwandung der Stützverrohrung 3 und der Ankerverrohrung 11 jedoch kein flüssiges oder gasförmiges Medium gefördert wird, kann auf eine derartige Verbindung auch verzichtet werden. Zum Herstellen einer Lastübertragungseinrichtung kann es hier im einfachsten Fall genügen, wenn die Innenrohrschüsse des betreffenden Innenrohrs an einer radial nach innen ragenden Schulter eines unteren oder oberen Endes eines Außenrohrschusses axial anliegen oder zwischen derart gebildeten Lastübertragungseinrichtungen eingespannt werden. Diese Fixierung ist ohnehin im Wesentlichen nur während der Montage bis zur Aushärtung des Mediums 9 erforderlich. Allerdings kann diese Art der Konstruktion der Ankerverrohrung 11 und auch in der Stützverrohrung 3 die Montage gravierend vereinfachen.

Die Isolierung der Ankerverrohrung 11 und/oder der Stützverrohrung 3 durch ein Innenrohr aus wärmeisolierendem Kunststoff kann speziell in einem oberen Bereich erfolgen, um hier Wärmeenergieverluste durch eine Wärmeabgabe von dem Wärmeträgermedium an das umgebende Erdreich zu vermeiden.

Hierdurch kann auch bei geringeren Bohrtiefen eine speziell gewünschte Temperatur des Wärmeträgermediums, beispielsweise für Fußbodenheizungen, erreicht werden.

### Bezugszeichenliste

- 1: tiefe Erdwärmesonde
- 3: äußeres Stützrohr / Stützverrohrung
- 5: Förderverrohrung
- 7: Förderrohrkopf
- 9: Medium (Beton)
- 11: Ankerverrohrung
- 13: äußeres Förderrohr
- 13a: Außenrohrschuss
- 15: inneres Förderrohr
- 15a: Innenrohrschuss
- 17: Rücklaufanschluss
- 19: Vorlaufanschluss
- 21: Förderrohrfuß
- 22: Verbindungselement
- 23: Lastübertragungseinrichtung
- 25: Lastübertragungselement
- 27: Stirnfläche
- 29: Fase
- 31: Fase
- 33: Lastübertragungselement
- 35: Vorkragung
- 37: ringförmiger Bereich
- 39: Lastübertragungselement
- 41: Lastübertragungselement
- 43: Lastübertragungselement
- 45: Lastübertragungselement
- 130: äußeres Rohr der Stützverrohrung 3
- 130a: Außenrohrschuss der Stützverrohrung 3
- 130'a: Außenrohrschuss der Stützverrohrung 3
- 150: inneres Rohr der Stützverrohrung 3
- 220: spezielles Verbindungselement
- 220a: Schulter
- 230: äußeres Rohr der Ankerverrohrung 11
- 250: inneres Rohr der Ankerverrohrung 11

## Patentansprüche

1. Verrohrung, insbesondere Förderverrohrung, Stützverrohrung oder Ankerverrohrung für eine Erdwärmesonde zur Gewinnung geothermischer Energie, insbesondere tiefengeothermischer Energie, wobei thermische Energie mittels eines vorzugsweise flüssigen Wärmeträgermediums aus einem tiefen Bereich in einen oberen Bereich der Erdwärmesonde transportiert wird,
(a) mit einem äußeren Rohr (13) aus einem Metall und
(b) mit einem innerhalb des äußeren Rohrs (13) vorgesehenen inneren Rohr (15) aus einem wärmeisolierendem Kunststoff, welches aus einer Mehrzahl von Innenrohrschüssen (15a) besteht,
(c) wobei das innere Rohr (15) an zwei oder mehreren axialen Positionen der Verrohrung (5) mittels jeweils einer Lastübertragungseinrichtung (23) zum Einleiten von auf das innere Rohr (15) wirkenden axialen Kräften auf das äußere Rohr (13) mit dem äußeren Rohr (13) verbunden ist,
**dadurch gekennzeichnet,**
(d) **dass** in axialen Sektionen zwischen zwei Lastübertragungseinrichtungen (23) die Innenrohrschüsse (15a) an Koppelstellen zwischen jeweils zwei unmittelbar benachbarten Enden der Innenrohrschüsse (15a) und/oder zumindest an einer Koppelstelle zwischen einer der beiden Lastübertragungseinrichtungen (23) und dem unmittelbar benachbarten Ende des betreffenden Innenrohrschusses (15a) gekoppelt sind, wobei die Kopplung an den Koppelstellen ohne einen Stoffschluss durch axiale Druckkräfte erzeugt oder zumindest unterstützt wird,
(e) **dass** das äußere Förderrohr (13) aus einer Mehrzahl von Außenrohrschüssen (13a) besteht und dass die zwischen dem oberen und dem unteren Ende der Verrohrung (5) vorgesehenen Lastübertragungseinrichtungen (23) jeweils eine in radialer Richtung über den Innenumfang des äußeren Förderrohrs (13) hinausragende Vorkragung (35) aufweisen, welche in einen axialen Abstandsspalt zwischen einander zugewandten Stirnseiten jeweils zweier benachbarter Außenrohrschüsse (13a) eingreift oder welche in eine oder mehrere falzartige Ausnehmungen eingreift, die an der Innenkante einer oder beider einander zugewandter Stirnseiten jeweils zweier benachbarter Außenrohrschüsse (13a) ausgebildet sind, und
(f) **dass** die Lastübertragungseinrichtungen jeweils ausschließlich aus einem einzigen Lastübertragungselement (25, 33, 39, 41, 43, 45) bestehen, welches im Wesentlichen hohlzylindrisch ausgebildet und im axialen Verlauf des inneren Förderrohrs (15) vorgesehen ist, wobei die Innenwandung des Lastübertragungselements (25, 33, 39, 41, 43, 45) die Innenwandung des inneren Förderrohrs (15) mitbildet.

2. Verrohrung nach Anspruch 1, **dadurch gekennzeichnet,**
(a) **dass** die axialen Druckkräfte durch auf die Innenrohrschüsse (15a) der betreffenden Sektion wirkende resultierende Auftriebskräfte erzeugt werden und dass sich die Innenrohrschüsse (15a) der betreffenden Sektion gegen die am oberen Ende oder oberhalb der Sektion vorgesehene Lastübertragungseinrichtung (23) abstützen oder
(b) **dass** die axialen Druckkräfte durch auf die Innenrohrschüsse (15a) der betreffenden Sektion wirkende resultierende Abtriebskräfte erzeugt werden und dass sich die Innenrohrschüsse (15a) der betreffenden Sektion gegen die am unteren Ende oder unterhalb der Sektion vorgesehene Lastübertragungseinrichtung (23) abstützen.

3. Verrohrung nach Anspruch 1, **dadurch gekennzeichnet, dass** die axialen Druckkräfte durch auf die Innenrohrschüsse (15a) der betreffenden Sektion wirkende axiale Klemmkräfte erzeugt werden, welche durch ein Abstützen der Innenrohrschüsse (15a) gegen die unterhalb der Sektion und oberhalb der Sektion vorgesehenen Lastübertragungseinrichtungen (23) erzeugt werden.

4. Verrohrung nach einem der vorhergehenden Ansprüche, **dadurch gekennzeichnet, dass** die beiden jeweils zu koppelnden Innenrohrschüsse (15a) oder der jeweils mit einer Lastübertragungseinrichtung (23) zu koppelnde Innenrohrschuss (15a) und die betreffende Lastübertragungseinrichtung (23) an den einander zugewandten Bereichen einer Koppelstelle so ausgebildet sind, dass ein Formschluss in einer Ebene senkrecht zur Achse des inneren Rohrs (15) gebildet ist.

5. Verrohrung nach Anspruch 4, **dadurch gekennzeichnet, dass** wenigstens eines der beiden zu koppelnden Elemente (15a; 23)an den einander zugewandten Bereichen einer Koppelstelle wenigstens eine in Bezug auf die Achse des Innenrohrs konische Zentrierfläche (z.B. 29) aufweist.

6. Verrohrung nach Anspruch 4 oder 5, **dadurch gekennzeichnet, dass** die jeweils zu koppelnden Elemente (15a: 23) an den einander zugewandten Bereichen einer Koppelstelle so ausgebildet sind, dass zusätzlich zu dem Formschluss ein Reibschluss gegen ein Auseinanderziehen der zu koppelnden Innenrohrschüsse (15a) oder des zu koppelnden Lastübertragungselements (23) und des benachbarten Innenrohrschusses (15a) gebildet ist, vorzugsweise durch das Zusammenwirken von wenigstens zwei in Bezug auf die Achse des inneren Förderrohrs (15) konischer Flächen, die nach einem Einwirken von axialen Druckkräften eine Selbsthemmung in axialer Richtung bewirken.

7. Verrohrung nach einem der vorhergehenden Ansprüche, **dadurch gekennzeichnet, dass** der Innendurchmesser des Lastübertragungselements (33, 39, 41, 43) im Wesentlichen dem Innendurchmesser der Innenrohrschüsse entspricht.

8. Verrohrung nach einem der vorhergehenden Ansprüche, **dadurch gekennzeichnet, dass** das Lastübertragungselement (25) scheibenartig ausgebildet ist, wobei die Dicke der Scheibe der axiale Länge der Vorkragung (35) entspricht.

9. Verrohrung einem der vorhergehenden Ansprüche, **dadurch gekennzeichnet, dass** die Vorkragung (35) an einem axialen Ende des Hohlzylinders oder in einem axial mittleren Bereich des Hohlzylinders vorgesehen ist.

10. Verrohrung nach Anspruch 9, **dadurch gekennzeichnet, dass** die hohlzylindrischen Bereiche des Lastübertragungselements (37, 39, 43) in axialer Richtung oberhalb und/oder unterhalb der Vorkragung (35) zumindest in einem axialen Teilbereich einen Außendurchmesser aufweisen, welcher im Wesentlichen dem Innendurchmesser des jeweils angrenzenden Außenrohrschusses entspricht, wobei der Außendurchmesser und die axiale Länge der axialen Teilbereiche vorzugsweise so gewählt ist, dass eine Dichtwirkung zwischen dem Außenumfang des Lastübertragungselements und dem Innenumfang des betreffenden Außenrohrschusses erzeugt wird.

11. Verrohrung nach einem der vorhergehenden Ansprüche, **dadurch gekennzeichnet,**
(a) **dass** die Vorkragung (35) eine solche axiale Dicke aufweist, dass sie von beiden einander zugewandten axialen Stirnflächen der benachbarten Außenrohrschüsse (13a) mit einer Axialkraft beaufschlagt wird, und
(b) **dass** die Vorkragung (35) vorzugsweise umlaufend um den Umfang des Lastübertragungselements (25, 33, 39, 41, 43, 45) und derart ausgebildet ist, dass eine Dichtwirkung erzeugt wird.

12. Verrohrung nach einem der vorhergehenden Ansprüche, **dadurch gekennzeichnet, dass** die Verrohrung als Förderverrohrung ausgebildet ist und dass am unteren Ende der Verrohrung (5) ein eine untere Lastübertragungseinrichtung (23) bildender Förderrohrfuß (21) vorgesehen ist und/oder am oberen Ende der Verrohrung (5) ein eine obere Lastübertragungseinrichtung (23) bildender Förderrohrkopf (7).

## Claims

1. Pipework system, in particular conveyor pipework system, supporting pipework system or anchoring pipework system for a downhole heat exchanger for obtaining geothermal energy, in particular deep geothermal energy, wherein thermal energy is transported by means of a preferably liquid heat transfer medium from a deep region into an upper region of the downhole heat exchanger,
(a) having an outer pipe (13) made from a metal and
(b) having an inner pipe (15) which is provided within the outer pipe (13), is made from a thermally insulating plastic, and consists of a plurality of inner pipe sections (15a),
(c) wherein the inner pipe (15) is connected to the outer pipe (13) at two or more axial positions of the pipework system (5) by means of in each case one load transmission device (23) for introducing axial forces which act on the inner pipe (15) onto the outer pipe (13),
**characterized**
(d) **in that** the inner pipe sections (15a) are coupled in axial sections between two load transmission devices (23) at coupling points between in each case two immediately adjacent ends of the inner pipe sections (15a) and/or at least at a coupling point between one of the two load transmission devices (23) and the immediately adjacent end of the relevant inner pipe section (15a), wherein the coupling is generated or at least assisted by way of axial pressure forces at the coupling points without an integrally joined connection,
(e) **in that** the outer conveyor pipe (13) consists of a plurality of outer pipe sections (13a) and in that the load transmission devices (23) provided between the upper and the lower end of the pipework system (5) in each case have a projection (35) which protrudes in a radial direction beyond the inner circumference of the outer conveyor pipe (13) and which engages in an axial spacer gap between end faces, facing each other, of in each case two adjacent outer pipe sections (13a) or which engages in one or more fold-like recesses, which are formed on the inner edge of one or both end faces, facing each other, of in each case two adjacent outer pipe sections (13a), and
(f) **in that** the load transmission devices in each case consist exclusively of a single load transmission element (25, 33, 39, 41, 43, 45), which is formed substantially hollow cylindrical and is provided in the axial course of the inner conveyor pipe (15), wherein the inner wall of the load transmission element (25, 33, 39, 41, 43, 45) also forms the inner wall of the inner conveyor pipe (15).

2. Pipework system according to claim 1, **characterized**
(a) **in that** the axial pressure forces are generated by resultant uplift forces acting on the inner pipe sections (15a) of the relevant section and in that the inner pipe sections (15a) of the relevant section are supported against the load transmission device (23) provided at the upper end or above the section, or
(b) **in that** the axial pressure forces are generated by resultant down forces acting on the inner pipe sections (15a) of the relevant section and in that the inner pipe sections (15a) of the relevant section are supported against the load transmission device (23) provided at the lower end or underneath the section.

3. Pipework system according to claim 1, **characterized in that** the axial pressure forces are generated by axial clamping forces acting on the inner pipe sections (15a) of the relevant section, which are generated by a supporting of the inner pipe sections (15a) against the load transmission devices (23) provided underneath the section and above the section.

4. Pipework system according to one of the preceding claims, **characterized in that** the two inner pipe sections (15a) to be coupled in each case or the inner pipe section (15a) to be coupled in each case to a load transmission device (23) and the relevant load transmission device (23) are formed on the regions of a coupling point that face each other such that an integrally joined connection is formed in a plane perpendicular to the axis of the inner pipe (15).

5. Pipework system according to claim 4, **characterized in that** at least one of the two elements (15a, 23) to be coupled has at least one centring surface (e.g. 29), which is conical with respect to the axis of the inner pipe, on the regions of a coupling point that face each other.

6. Pipework system according to claim 4 or 5, **characterized in that** the elements (15a, 23) to be coupled in each case are formed on the regions of a coupling point that face each other such that, in addition to the integrally joined connection, a frictional connection is formed against a pulling apart of the inner pipe sections (15a) to be coupled or the load transmission element (23) to be coupled and the adjacent inner pipe section (15a), preferably through the interaction of at least two surfaces which are conical with respect to the axis of the inner conveyor pipe (15) and bring about a self-locking in the axial direction after an action of axial pressure forces.

7. Pipework system according to one of the preceding claims, **characterized in that** the inner diameter of the load transmission element (33, 39, 41, 43) substantially corresponds to the inner diameter of the inner pipe sections.

8. Pipework system according to one of the preceding claims, **characterized in that** the load transmission element (25) is formed disc-shaped, wherein the thickness of the disc corresponds to the axial length of the projection (35).

9. Pipework system according to one of the preceding claims, **characterized in that** the projection (35) is provided at an axial end of the hollow cylinder or in an axially central region of the hollow cylinder.

10. Pipework system according to claim 9, **characterized in that**, in the axial direction above and/or underneath the projection (35), at least in an axial partial region the hollow-cylindrical regions of the load transmission element (37, 39, 43) have an outer diameter which substantially corresponds to the inner diameter of the respectively adjoining outer pipe section, wherein the outer diameter and the axial length of the axial partial regions are preferably chosen such that a seal effect is generated between the outer circumference of the load transmission element and the inner circumference of the relevant outer pipe section.

11. Pipework system according to one of the preceding claims, **characterized**
(a) **in that** the projection (35) has an axial thickness such that it is acted on by an axial force from both axial end faces, facing each other, of the adjacent outer pipe sections (13a), and
(b) **in that** the projection (35) is preferably formed circumferentially around the circumference of the load transmission element (25, 33, 39, 41, 43, 45) and is formed in such a way that a seal effect is generated.

12. Pipework system according to one of the preceding claims, **characterized in that** the pipework system is formed as a conveyor pipework system and **in that** a conveyor pipe foot (21) forming a lower load transmission device (23) is provided at the lower end of the pipework system (5) and/or a conveyor pipe head (7) forming an upper load transmission device (23) is provided at the upper end of the pipework system (5).

## Revendications

1. Tuyauterie, en particulier tuyauterie de transport, tuyauterie de support ou tuyauterie d'ancrage pour une sonde géothermique permettant la génération d'énergie géothermique, en particulier d'énergie géothermique profonde, de l'énergie thermique étant transportée au moyen d'un milieu caloporteur, de préférence liquide, d'une zone profonde à une zone supérieure de la sonde géothermique,
(a) comportant un tuyau extérieur (13) en métal et
(b) un tuyau intérieur (15) en matière plastique thermo-isolante, disposé à l'intérieur du tuyau extérieur (13), lequel tuyau intérieur est composé d'une pluralité d'éléments de tuyau intérieur (15a),
(c) le tuyau intérieur (15) étant raccordé au tuyau extérieur (13) à au moins deux positions axiales de la tuyauterie (5) au moyen respectivement d'un dispositif de transfert de charge (23) permettant l'action sur le tuyau extérieur (13) de forces axiales agissant sur le tuyau intérieur (15),
**caractérisée en ce**
(d) **que**, dans des sections axiales entre deux dispositifs de transfert de charge (23), les éléments de tuyau intérieur (15a) sont accouplés à des points d'accouplement entre respectivement deux extrémités immédiatement adjacentes des éléments de tuyau intérieur (15a) et/ou au moins à un point d'accouplement entre l'un des deux dispositifs de transfert de charge (23) et l'extrémité immédiatement adjacente de l'élément de tuyau intérieur (15a) concerné, l'accouplement étant généré ou au moins supporté par des forces de compression axiales aux points d'accouplement sans liaison de matière,
(e) **que** le tuyau de transport extérieur (13) se compose d'une pluralité d'éléments de tuyau extérieur (13a) et que les dispositifs de transfert de charge (23) prévus entre les extrémités supérieure et inférieure de la tuyauterie (5) présentent chacun une saillie (35) faisant saillie dans la direction radiale sur la circonférence intérieure du tuyau de transport extérieur (13), laquelle saille vient en prise dans un espacement axial entre des faces frontales se faisant face de respectivement deux éléments de tuyau extérieur (13a) adjacents ou laquelle saillie vient en prise dans un ou plusieurs évidements en forme de pli qui sont formés sur le bord intérieur d'une ou de deux faces frontales se faisant face de respectivement deux éléments de tuyau extérieur (13a) adjacents, et
(f) **que** les dispositifs de transfert de charge se composent respectivement exclusivement d'un seul élément de transfert de charge (25, 33, 39, 41, 43, 45) qui est essentiellement en forme de cylindre creux et est prévu dans le tracé axial du tuyau de transport intérieur (15), la paroi intérieure de l'élément de transfert de charge (25, 33, 39, 41, 43, 45) formant la paroi intérieure du tuyau de transport intérieur (15).

2. Tuyauterie selon la revendication 1, **caractérisée en ce**
(a) **que** les forces de compression axiales sont générées par des forces de portance résultantes agissant sur les éléments de tuyau intérieur (15a) de la section concernée et que les éléments de tuyau intérieur (15a) de la section concernée s'appuient contre le dispositif de transfert de charge (23) prévu au niveau de l'extrémité supérieure ou au-dessus de la section ou
(b) **que** les forces de compression axiales sont générées par des forces de déportance résultantes agissant sur les éléments de tuyau intérieur (15a) de la section concernée et que les éléments de tuyau intérieur (15a) de la section concernée s'appuient contre le dispositif de transfert de charge (23) prévu au niveau de l'extrémité inférieure ou en dessous de la section.

3. Tuyauterie selon la revendication 1, **caractérisée en ce que** les forces de compression axiales sont générées par des forces de serrage axiales agissant sur les éléments de tuyau intérieur (15a) de la section concernée, lesquelles forces de serrage sont générées par un appui des éléments de tuyau intérieur (15a) contre les dispositifs de transfert de charge (23) prévus en dessous ou au-dessus de la section.

4. Tuyauterie selon l'une des revendications précédentes, **caractérisée en ce que** les deux éléments de tuyau intérieur (15a) à accoupler respectivement ou l'élément de tuyau intérieur (15a) à accoupler respectivement avec un dispositif de transfert de charge (23) et le dispositif de transfert de charge (23) correspondant sont conçus au niveau des zones se faisant face d'un point d'accouplement de telle sorte qu'une complémentarité de forme dans un plan perpendiculaire à l'axe du tuyau intérieur (15) est formée.

5. Tuyauterie selon la revendication 4, **caractérisée en ce qu'**au moins l'un des deux éléments (15a ; 23) à accoupler présente au moins une surface de centrage (par exemple 29) qui est conique par rapport à l'axe du tuyau intérieur au niveau des zones se faisant face d'un point d'accouplement.

6. Tuyauterie selon la revendication 4 ou 5, **caractérisée en ce que** les éléments (15a ; 23) à accoupler respectivement sont conçus au niveau des zones se faisant face d'un point d'accouplement de telle sorte qu'en plus de la complémentarité de forme, une liaison par friction est formée, laquelle empêche un étirement de l'élément de tuyau intérieur (15a) à accoupler ou de l'élément de transfert de charge (23) à accoupler et de l'élément de tuyau intérieur (15a) adjacent, de préférence par l'interaction d'au moins deux surfaces coniques par rapport à l'axe du tuyau de transport intérieur (15) qui, après une action de forces de compression axiales, provoque un blocage automatique dans la direction axiale.

7. Tuyauterie selon l'une des revendications précédentes, **caractérisée en ce que** le diamètre intérieur de l'élément de transfert de charge (33, 39, 41, 43) correspond essentiellement au diamètre intérieur des éléments de tuyau intérieur.

8. Tuyauterie selon l'une des revendications précédentes, **caractérisée en ce que** l'élément de transfert de charge (25) est réalisé sous forme de disque, l'épaisseur du disque correspondant à la longueur axiale de la saillie (35).

9. Tuyauterie selon l'une des revendications précédentes, **caractérisée en ce que** la saillie (35) est prévue à une extrémité axiale du cylindre creux ou dans une zone axialement médiane du cylindre creux.

10. Tuyauterie selon la revendication 9, **caractérisée en ce que** les zones de cylindre creux de l'élément de transfert de charge (37, 39, 43) présentent, dans la direction axiale au-dessus et/ou en dessous de la saillie (35), au moins un diamètre extérieur dans une zone partielle axiale, lequel correspond essentiellement au diamètre intérieur de l'élément de tuyau extérieur adjacent respectif, le diamètre extérieur et la longueur axiale de la zone partielle axiale étant de préférence choisis de telle sorte qu'un effet d'étanchéité est généré entre la circonférence extérieure de l'élément de transfert de charge et la circonférence intérieure de l'élément de tuyau extérieur concerné.

11. Tuyauterie selon l'une des revendications précédentes, **caractérisée en ce**
(a) **que** la saillie (35) présente une épaisseur axiale telle qu'elle est soumise à une force axiale par les deux faces frontales axiales se faisant face des éléments de tuyau extérieur (13a) adjacents, et
(b) **que** la saillie (35) entoure de préférence la circonférence de l'élément de transfert de charge (25, 33, 39, 41, 43, 45) et est conçue de telle sorte qu'un effet d'étanchéité est généré.

12. Tuyauterie selon l'une des revendications précédentes, **caractérisée en ce que** la tuyauterie est conçue en tant que tuyauterie de transport et qu'un pied de tuyau de transport (21) formant un dispositif de transfert de charge (23) inférieur est prévu au niveau de l'extrémité inférieure de la tuyauterie (5) et/ou une tête de tuyau de transport (7) formant un dispositif de transfert de charge (23) supérieur est prévue au niveau de l'extrémité supérieure de la tuyauterie (5).
